# EUROPÄISCHE PATENTSCHRIFT

(11) **EP 3 952 711 B1**
(45) Veröffentlichungstag und Bekanntmachung des Hinweises auf die Patenterteilung: **25.06.2025**
(21) Anmeldenummer: 19718097.9
(22) Anmeldetag: 08.04.2019
(51) Int. Cl.: A47L 11/40

(54) **FLÄCHEN-REINIGUNGSMASCHINE MIT TANKEINRICHTUNG FÜR SCHMUTZFLUID**
SURFACE CLEANING MACHINE WITH TANK ARRANGEMENT FOR DIRTY FLUID
MACHINE DE NETTOYAGE DE SURFACES À RÉSERVOIR POUR FLUIDE SALE

(43) Veröffentlichungstag der Anmeldung: 16.02.2022
(73) Patentinhaber: Alfred Kärcher SE & Co. KG, 71364 Winnenden (DE)
(72) Erfinder: MOSER, Fabian, 73614 Schorndorf (DE); SCHARMACHER, Michael, 71364 Winnenden (DE)
(74) Vertreter: Hoeger, Stellrecht & Partner Patentanwälte mbB
(86) Internationale Anmeldenummer: PCT/EP2019/058844
(87) Internationale Veröffentlichungsnummer: WO 2020/207557

(56) Entgegenhaltungen:
- WO-A1-2016/058856
- WO-A1-2019/048449
- WO-A1-2019/048496
- DE-U1- 202016 105 300
- US-A1- 2006 190 133

## Beschreibung

Die Erfindung betrifft eine Flächen-Reinigungsmaschine, umfassend einen Reinigungskopf mit mindestens einer Reinigungswalzeneinheit, welche für eine Rotationsbewegung angetrieben ist, eine Tankeinrichtung für Schmutzfluid und eine Sondeneinrichtung zur Ermittlung eines Befüllungsgrads der Tankeinrichtung für Schmutzfluid, wobei die Sondeneinrichtung als Elektrodeneinrichtung ausgebildet ist und eine erste Elektrode und eine zu der ersten Elektrode beabstandete zweite Elektrode aufweist, welche in einen Aufnahmeraum der Tankeinrichtung für Schmutzfluid ragen.

Die US 2006/0190133 A1 offenbart einen autonomen Bodenreinigungsroboter mit einem Fahrgestell. Das Fahrgestell trägt einen Vorrat an Reinigungsfluid und einen Aufnahmebehälter für Materialien, welche von einer zu reinigenden Oberfläche aufgesammelt werden.

Die WO 2019/048449 A1 offenbart ein selbstfahrendes und selbstlenkendes Bodenreinigungsgerät mit einem Reinigungsflüssigkeitsbehälter und einem Schmutzflüssigkeitsbehälter.

Aus den Anmeldungen WO 2016/058901 A1, WO 2016/058856 A1, WO 2017/063663 A1, WO 2016/058879 A1, WO 2016/058956 A1 sind Flächen-Reinigungsmaschinen bekannt. Aus der WO 2016/058907 A1 ist ebenfalls eine Flächen-Reinigungsmaschine bekannt.

Aus der US 4,875,246 ist eine tragbare Bodenreinigungsvorrichtung bekannt, welche eine durch einen elektrischen Motor angetriebene Walze aufweist.

Aus der DE 20 2009 013 434 U1 ist eine Vorrichtung zur Fußboden-Nassreinigung mit einer Bürste, welche um eine Rotationsachse drehbar ist, bekannt.

Aus der CN 201 197 698 Y ist eine Reinigungsmaschine bekannt.

Aus der US 6,026,529 ist eine Vorrichtung zum Reinigen von Böden oder andere Hartflächen bekannt.

Aus der WO 2005/087075 A1 ist eine Bodenreinigungsmaschine mit einem Handgriff bekannt, welcher schwenkbar an einer Basis angeordnet ist.

Aus der WO 2015/086083 A1 ist eine weitere Bodenreinigungsmaschine bekannt.

Aus der US 3,789,449 ist ein Hartboden-Reinigungsgerät bekannt.

Die CN 107007215 A offenbart einen Bodenreinigungsroboter.

Die DE 20 2018 104 772 U1 offenbart einen Schmutzwassersammelmechanismus und Schmutzwasserdetektionsmechanismus und eine Reinigungsvorrichtung.

Der Erfindung liegt die Aufgabe zugrunde, eine Flächen-Reinigungsmaschine der eingangs genannten Art bereitzustellen, welche auf einfache und sichere Weise betreibbar ist.

Diese Aufgabe wird bei der eingangs genannten Flächen-Reinigungsmaschine erfindungsgemäß dadurch gelöst, dass die erste Elektrode und die zweite Elektrode fest mit einem Halter für die Tankeinrichtung für Schmutzfluid verbunden sind,wobei die Tankeinrichtung für Schmutzfluid von dem Halter lösbar ist.

Durch die Sondeneinrichtung lässt sich erkennen, ob die Tankeinrichtung für Schmutzfluid mit Schmutzfluid befüllt ist. Es lässt sich dadurch verhindern, dass die Flächen-Reinigungsmaschine weiter betrieben wird, wenn ein bestimmter Befüllungsgrad der Tankeinrichtung erreicht ist bzw. einem Bediener kann angezeigt werden (insbesondere optisch und/oder akustisch), dass die Tankeinrichtung für Schmutzfluid entleert werden muss.

Es lässt sich dadurch verhindern, dass die Tankeinrichtung für Schmutzfluid überfüllt wird und ein Reinigungsergebnis unzureichend wird; es wird ein Überlaufen der Tankeinrichtung verhindert, durch das Schmutzfluid wieder auf eine zu reinigende Fläche gelangen kann.

Weiterhin wird die Entleerung der Tankeinrichtung für einen Bediener erleichtert, da insbesondere der bestimmte Befüllungsgrad so bestimmt ist, dass ein leichtes Entleeren der Tankeinrichtung für Schmutzfluid ermöglicht ist. Insbesondere ist auch ein Entnehmen der Tankeinrichtung für Schmutzfluid ermöglicht, ohne dass, wenn der bestimmte Befüllungsgrad nicht überschritten wird, Schmutzfluid ausschwappen kann.

Weiterhin wird eine mögliche Beschädigung eines Bodenbelags als zu reinigende Fläche durch auslaufende Flüssigkeit bzw. Pfützenbildung vermieden.

Ganz besonders vorteilhaft ist es, wenn die Sondeneinrichtung als Widerstandsmesseinrichtung ausgebildet ist. Eine solche Sondeneinrichtung lässt sich auf einfache Weise ausbilden, ansteuern und auswerten. Es lässt sich bei einer Widerstandsmesseinrichtung auf einfache Weise prüfen, ob Schmutzfluid zwischen Sonden der Sondeneinrichtung vorhanden ist. Dies lässt sich über die Strommessung bzw. Widerstandsmessung durchführen. Wenn beispielsweise ein bestimmter Befüllungsgrad erreicht ist, und sich Flüssigkeit (Schmutzfluid) zwischen Sonden der Sondeneinrichtung befindet, dann kann über das Schmutzfluid zwischen den Sonden ein Strom fließen. Dies äußert sich in einer Widerstandsänderung im Vergleich zu dem Fall, in dem sich keine Flüssigkeit zwischen den Sonden befindet. Diese Widerstandsänderung ist detektierbar und zeigt eben das Erreichen eines bestimmen Befüllungsgrads an. Dieser bestimmte Befüllungsgrad wird wiederum durch die relative Anordnung der Sonden an der Tankeinrichtung vorgegeben. Die Sondeneinrichtung in der Ausbildung als Widerstandsmesseinrichtung lässt sich auf einfache und kostengünstige Weise realisieren. Die entsprechende Sondeneinrichtung lässt sich wenig anfällig realisieren. Auch die Anfälligkeit bei Kontakt mit Schmutz im Schmutzfluid lässt sich gering halten.

Die Sondeneinrichtung ist als Elektrodeneinrichtung ausgebildet. Die Sonden sind dann insbesondere Elektroden, zwischen welchen eine Spannung angelegt wird, bzw. welche mit einem Strom beaufschlagt wird. Es lässt sich auf einfache Weise eine Widerstandsermittlung durchführen, wobei eine Widerstandänderung ein Maß ist, dass ein bestimmter Befüllungsgrad erreicht ist.

Die Elektrodeneinrichtung weist mindestens ein Elektrodenpaar mit einer ersten Elektrode und einer zu der ersten Elektrode beabstandeten zweiten Elektrode auf, welche in einen Aufnahmeraum der Tankeinrichtung für Schmutzfluid ragen. Die Anordnung der Elektroden bestimmt, welcher bestimmte Befüllungsgrad detektiert werden soll. Wenn eine Mehrzahl von Elektrodenpaaren aus (jeweils) erster Elektrode und zweiter Elektrode vorgesehen ist, welche auf unterschiedlichen Höhen angeordnet sind, dann lassen sich auch unterschiedliche bestimmte Befüllungsgrade ermitteln.

Die erste Elektrode und die zweite Elektrode sind fest mit einem Halter für die Tankeinrichtung für Schmutzfluid verbunden, wobei die Tankeinrichtung für Schmutzfluid von dem Halter lösbar ist. Es lässt sich dadurch auf einfache Weise eine Sondeneinrichtung realisieren, welche nicht mit der Tankeinrichtung für Schmutzfluid lösbar sein muss. Es ergibt sich dadurch eine einfache konstruktive Ausbildung.

Es ist vorteilhafterweise vorgesehen, dass die Elektrodeneinrichtung so angeordnet und ausgebildet ist, dass ein bestimmter Befüllungsgrad der Tankeinrichtung für Schmutzfluid detektierbar ist. Wenn Elektroden der Elektrodeneinrichtung in einer bestimmten Höhe in den Aufnahmeraum der Tankeinrichtung ragen, und dabei Elektrodenpaare gebildet sind, dann lässt sich ein bestimmter Befüllungsgrad dadurch detektieren, dass Flüssigkeit zwischen Elektroden eines Elektrodenpaars gelangt.

Bei einer Ausführungsform ist eine Gleichstrombeaufschlagung oder Gleichspannungsbeaufschlagung der Elektrodeneinrichtung vorgesehen. Es erfolgt eine Beaufschlagung mit einem Grundsignal und aus einem Reaktionssignal lässt sich dann der Befüllungsgrad bestimmen. Insbesondere erfolgt eine Gleichspannungsbeaufschlagung von Elektroden eines Elektrodenpaars. Wenn sich keine Flüssigkeit zwischen den Elektroden des Elektrodenpaars befindet, dann kann kein Strom zwischen diesen fließen. Idealisiert kann der Widerstand als unendlich angesehen werden. Wenn sich Flüssigkeit (Schmutzfluid) zwischen den Elektroden eines Elektrodenpaars befindet, dann kann über die Flüssigkeit ein Strom fließen. Dadurch verringert sich der Widerstand. Es entsteht dadurch ein entsprechendes Reaktionssignal, welches ermittelbar ist. Aus der entsprechenden Änderung im Reaktionssignal (zugehörig zunächst zu einem idealisierten Widerstand von unendlich und dann zu einem endlichen Widerstand) lässt sich detektieren, ob ein Flüssigkeitspegel in der Tankeinrichtung für Schmutzfluid das entsprechende Elektrodenpaar erreicht hat.

Günstig ist es, wenn die Sondeneinrichtung signalwirksam mit einer Auswerteeinrichtung verbunden ist, insbesondere mit mindestens einem der Folgenden:
- die Auswerteeinrichtung steuert eine Anzeigeeinrichtung und/oder einen Sender an;
- die Auswerteeinrichtung initiiert für die Anzeigeeinrichtung und/oder den Sender ein Warnsignal, wenn das Erreichen eines bestimmten Befüllungsgrads detektiert ist;
- die Auswerteeinrichtung prüft über eine Widerstandsermittlung einen Befüllungsgrad der Tankeinrichtung für Schmutzfluid;
- die Auswerteeinrichtung steuert die Sondeneinrichtung insbesondere mit einem Gleichstromsignal oder Gleichspannungssignal an;
- die Auswerteeinrichtung umfasst eine Filtereinrichtung, welche zeitliche Veränderungen in den Signalen der Sondeneinrichtung prüft, wobei insbesondere die Filtereinrichtung so ausgebildet ist, dass ein zeitlich begrenztes Schwappen von Schmutzfluid in der Tankeinrichtung für Schmutzfluid erkennbar ist;
- die Auswerteeinrichtung schaltet einen Antrieb für die mindestens eine Reinigungswalzeneinheit und/oder eine Förderung oder Förderbarkeit von Reinigungsflüssigkeit ab, wenn ein bestimmter Befüllungsgrad an der Tankeinrichtung für Schmutzfluid detektiert ist;
- die Auswerteeinrichtung verhindert bei einer Inbetriebnahme der Flächen-Reinigungsmaschine einen Rotationsantrieb der mindestens einen Reinigungswalzeneinheit und/oder einen Saugbetrieb, wenn ein bestimmter Befüllungsgrad detektiert ist.

Durch Ansteuerung einer Anzeigeeinrichtung durch die Auswerteeinrichtung kann einem Bediener ein Befüllungsgrad angezeigt werden und insbesondere ein Warnsignal abgegeben werden. Wenn entsprechend ein Sender angesteuert wird, kann beispielsweise an einer Fernbedienung oder an einem mobilen Gerät ein Befüllungszustand der Tankeinrichtung für Schmutzfluid angezeigt werden und es kann insbesondere ein Warnsignal über dieses mobile Gerät abgegeben werden.

Die Auswerteeinrichtung prüft vorzugsweise über eine Widerstandsermittlung einen Befüllungsgrad der Tankeinrichtung für Schmutzfluid. Es ist dabei vorzugsweise vorgesehen, dass die Auswerteeinrichtung die Sondeneinrichtung insbesondere mit einem Gleichstromsignal oder einem Gleichspannungssignal ansteuert. Über ein entsprechendes Reaktionssignal kann dann die Auswerteeinrichtung den Befüllungsgrad erkennen und insbesondere erkennen, ob ein bestimmter Befüllungsgrad erreicht ist.

Die Auswerteeinrichtung umfasst vorzugsweise eine Filtereinrichtung und insbesondere elektronische Filtereinrichtung, welche zeitliche Veränderungen in den Signalen der Sondeneinrichtung prüft. Es lässt sich so erkennen, ob ein relativ kurzfristiges Schwappen von Schmutzfluid in der Tankeinrichtung für Schmutzfluid vorliegt, oder nicht. Dadurch lässt sich gewissermaßen ein kurzzeitiges Schwappen ausfiltern, um sicher den Befüllungsgrad bestimmen zu können. Insbesondere ist die Auswerteeinrichtung so ausgebildet, dass ein Betrieb der Flächen-Reinigungsmaschine abgeschaltet wird, wenn ein bestimmter Befüllungsgrad für die Tankeinrichtung für Schmutzfluid detektiert wird, und/oder dass eine Inbetriebnahme bei entsprechender Detektion verhindert wird. Dadurch wird insbesondere eine Überfüllung der Tankeinrichtung für Schmutzfluid verhindert. Es lässt sich eine Entleerung der Tankeinrichtung für Schmutzfluid ergonomisch erhalten, da eine maximale Füllhöhe (der bestimmte Befüllungsgrad) nicht überschritten werden kann. Es wird eine mögliche Beschädigung eines Bodenbelags durch auslaufendes Schmutzfluid bzw. Pfützenbildung vermieden.

Günstig ist es, wenn die Anzeigeeinrichtung an einem Handgriff angeordnet ist, über welchen der Reinigungskopf durch einen Bediener führbar ist, und/oder dass die Anzeigeeinrichtung an dem Reinigungskopf angeordnet ist. Dadurch kann ein Bediener den Befüllungszustand der Tankeinrichtung für Schmutzfluid auf einfache Weise erkennen. Ein Warnsignal kann durch einen Bediener auf einfache Weise erkannt werden. Insbesondere wird an der Anzeigeeinrichtung ein optisches und/oder akustisches Signal angezeigt.

Bei einer Ausführungsform sind eine erste Reinigungswalzeneinheit und eine zu der ersten Reinigungswalzeneinheit beabstandete zweite Walzeneinheit vorgesehen, wobei die Tankeinrichtung für Schmutzfluid zwischen der ersten Reinigungswalzeneinheit und der zweiten Walzeneinheit positioniert ist. Insbesondere ist dabei der Reinigungskopf über die erste Reinigungswalzeneinheit und die zweite Walzeneinheit an einer zu reinigenden Fläche abgestützt. Es lässt sich dadurch die Lage der Tankeinrichtung für Schmutzfluid relativ stabil halten. Das Schwappen von Schmutzfluid in der Tankeinrichtung für Schmutzfluid wird gering gehalten.

Die zweite Walzeneinheit ist bei einer Ausführungsform eine zweite Reinigungswalzeneinheit oder eine Kehrwalzeneinheit, wobei insbesondere eine gegenläufige Rotation der ersten Reinigungswalzeneinheit und der zweiten Walzeneinheit vorgesehen ist. Grundsätzlich ist es auch möglich, dass die zweite Walzeneinheit eine reine Abstützeinheit ist ohne Reinigungsfunktion.

Bei einer Ausführungsform ist eine Deckelwandung vorgesehen, welche mit dem Reinigungskopf verbunden ist und welche die Tankeinrichtung für Schmutzfluid abdeckt. Es ergibt sich dadurch ein einfacher konstruktiver Aufbau. Insbesondere lässt sich dann die Tankeinrichtung für Schmutzfluid von unten her an dem Reinigungskopf einsetzen, oder von der Seite her und dabei insbesondere zwischen der ersten Reinigungswalzeneinheit und der zweiten Walzeneinheit.

Es ist dann vorteilhaft, wenn Elektroden der Sondeneinrichtung an der Deckelwandung angeordnet sind und insbesondere fest mit dem Reinigungskopf verbunden sind. Es lässt sich dadurch eine Sondeneinrichtung realisieren, welche nicht lösbar mit der Tankeinrichtung für Schmutzfluid sein muss. Beispielsweise bildet die Deckelwandung dann selber einen Deckel für die Tankeinrichtung, oder es ist ein weiterer Deckel für die Tankeinrichtung vorgesehen. Dieser ist dann mit entsprechenden Durchführungen für die Elektroden versehen.

Es ist dann günstig, wenn Elektroden der Sondeneinrichtung in einer Richtung quer zu einer Ebene von der Deckelwandung in einen Aufnahmeraum der Tankeinrichtung für Schmutzfluid ragen, wobei eine erste Rotationsachse der ersten Rotationswalzeneinheit und eine zweite Walzenachse der zweiten Walzeneinheit in dieser Ebene liegen. Die genannte Ebene ist insbesondere parallel zu einer Einhüllendenebene der Deckelwandung. Es ergibt sich dadurch ein einfacher konstruktiver Aufbau. Die Elektroden lassen sich fest an dem Reinigungskopf positionieren.

Bei einer alternativen Ausführungsform ist die Tankeinrichtung für Schmutzfluid lösbar an einer Haltestabeinrichtung angeordnet, an welcher der Reinigungskopf sitzt. Die Haltestabeinrichtung dient insbesondere dazu, dass ein Bediener stehend die Flächen-Reinigungsmaschine bedienen kann, wobei der Bediener dann insbesondere auf einem Boden aufsteht, welcher mit der Flächen-Reinigungsmaschine gereinigt werden soll. Insbesondere ist die Sondeneinrichtung fest mit der Haltestabeinrichtung verbunden, wenn die Tankeinrichtung für Schmutzfluid lösbar ist. Eine Lösung der Tankeinrichtung bedeutet dann, dass die Sondeneinrichtung nicht mit der Tankeinrichtung mitgenommen werden muss.

Es ist auch möglich, dass die erfindungsgemäße Flächen-Reinigungsmaschine als selbstfahrendes und selbstlenkendes Gerät und dabei insbesondere als Reinigungsroboter ausgebildet ist.

Weiterhin ist es möglich, dass die Flächen-Reinigungsmaschine als handgeführtes Gerät ausgebildet ist, welches insbesondere eine Haltestabeinrichtung aufweist, an welcher der Reinigungskopf sitzt. Insbesondere bedient ein stehender Bediener, welcher auf der zu reinigenden Fläche steht, dann das handgeführte Gerät, wobei der Reinigungskopf mit der mindestens einen Reinigungswalzeneinheit auf der zu reinigenden Fläche abgestützt ist.

Günstig ist es, wenn eine Befeuchtungseinrichtung vorgesehen ist, mittels welcher die mindestens eine Reinigungswalzeneinheit und/oder eine zu reinigende Fläche mit Reinigungsflüssigkeit beaufschlagbar ist, wobei die Befeuchtungseinrichtung eine Tankeinrichtung für Reinigungsflüssigkeit aufweist. Es lässt sich dadurch eine verbesserte Schmutzlösung erreichen.

Günstig ist es, wenn ein Durchflussbereich für Reinigungsflüssigkeit vorgesehen ist, durch welchen Reinigungsflüssigkeit, welche von der Tankeinrichtung für Reinigungsflüssigkeit bereitgestellt ist, bei Zuführung zu der mindestens einen Reinigungswalzeneinheit und/oder zu einer zu reinigenden Fläche strömt.

An dem Durchflussbereich ist eine Sensoreinrichtung angeordnet, welche die Anwesenheit von Reinigungsflüssigkeit in dem Durchflussbereich ermittelt.

Durch Prüfung, ob Reinigungsflüssigkeit in dem Durchflussbereich ist, lässt sich ermitteln, ob die Tankeinrichtung leer ist (das heißt keine Reinigungsflüssigkeit mehr enthält) oder nicht. Wenn die Tankeinrichtung entleert ist, dann befindet sich auch in dem Durchflussbereich keine Reinigungsflüssigkeit mehr.

Es lässt sich dadurch auf einfache Weise eine Entleerung der Tankeinrichtung für Reinigungsflüssigkeit überwachen. Diese Prüfung lässt sich außerhalb der Tankeinrichtung durchführen. Dadurch lässt sich die Tankeinrichtung für Reinigungsflüssigkeit und auch die Flächen-Reinigungsmaschine auf einfache Weise gestalten. Es müssen keine Vorkehrungen dafür getroffen werden, dass die Sensoreinrichtung oder ein Teil der Sensoreinrichtung von der Flächen-Reinigungsmaschine abnehmbar sein muss.

Durch die Anordnung der Sensoreinrichtung an dem Durchflussbereich lässt sich lageunabhängig die Überprüfung der Tankeinrichtung für Reinigungsflüssigkeit durchführen. Auch eine Schwappung von Reinigungsflüssigkeit in der Tankeinrichtung für Reinigungsflüssigkeit hat keine Auswirkungen auf die Überprüfung durch die Sensoreinrichtung.

Durch Ermittlung, ob die Tankeinrichtung für Reinigungsflüssigkeit leer ist, lässt sich auf einfache Weise verhindern, dass die Flächen-Reinigungsmaschine ohne Reinigungsflüssigkeit betrieben wird. Es lässt sich dadurch ein zufriedenstellendes Reinigungsergebnis sicherstellen. Ferner wird eine mögliche Beschädigung eines Flächenbelags (wie eines Bodenbelags) verhinderbar, indem entsprechende Detektionsergebnisse der Sensoreinrichtung beispielsweise zu einer Abschaltung der Flächen-Reinigungsmaschine und dabei insbesondere für einen rotatorischen Antrieb der mindestens einen Reinigungswalzeneinheit verwendet werden.

Günstig ist es, wenn der Durchflussbereich an einem Rohrbereich oder einem Schlauchbereich gebildet ist. Dadurch lässt sich die entsprechende Flächen-Reinigungsmaschine auf einfache Weise ausbilden.

Bei einer Ausführungsform ist der Durchflussbereich beim ordnungsgemäßen Betrieb der Flächen-Reinigungsmaschine bezogen auf die Schwerkraftrichtung unterhalb der Tankeinrichtung für Reinigungsflüssigkeit angeordnet. Dadurch lässt sich insbesondere Reinigungsflüssigkeit aus der Tankeinrichtung schwerkraftgetrieben und insbesondere pumpenfrei der mindestens einen Reinigungswalzeneinheit und/oder der zu reinigenden Fläche bereitstellen. Es ist insbesondere keine Pumpe notwendig.

Aus den gleichen Gründen ist es günstig, wenn bezogen auf eine Strömungsrichtung von Reinigungsflüssigkeit der Durchflussbereich einen Anschluss für die Tankeinrichtung für Reinigungsflüssigkeit nachgeordnet ist. Es lässt sich dadurch eine Detektionsprüfung für die Befüllung der Tankeinrichtung für Reinigungsflüssigkeit (zumindest "digital" bezüglich Reinigungsflüssigkeit oder leerer Tankeinrichtung) durchführen. Diese Prüfung lässt sich im Wesentlichen lageunabhängig durchführen und eine Schwappung von Reinigungsflüssigkeit in der Tankeinrichtung beeinflusst das Messergebnis nicht.

Bei einer konstruktiv einfachen Ausführungsform ist ein Halter vorgesehen, an dem die Tankeinrichtung für Reinigungsflüssigkeit insbesondere lösbar gehalten ist. Es lässt sich dadurch auf einfache Weise die Tankeinrichtung für Reinigungsflüssigkeit an der Flächen-Reinigungsmaschine und dabei beispielsweise an einer Haltestabeinrichtung oder an dem Reinigungskopf positionieren.

Es ergibt sich ein konstruktiv einfacher Aufbau, wenn an dem Halter ein Anschluss für die Tankeinrichtung für Reinigungsflüssigkeit angeordnet ist.

Es ist dabei insbesondere vorgesehen, dass eine Durchströmbarkeit des Durchflussbereichs mit einem Rotationsantrieb der mindestens einen Reinigungswalzeneinheit gekoppelt ist und/oder dass der Durchflussbereich einer Ventileinrichtung für die Förderung von Reinigungsflüssigkeit zu der mindestens einen Reinigungswalzeneinheit und/oder zu der zu reinigenden Fläche vorgeschaltet ist. Wenn beispielsweise die Flächen-Reinigungsmaschine angeschaltet wird, das heißt der Rotationsantrieb angeschaltet wird, dann kann beispielsweise durch Öffnung einer Ventileinrichtung der Durchflussbereich durchströmt werden, um der mindestens einen Reinigungswalzeneinheit und/oder der zu reinigenden Fläche Reinigungsflüssigkeit bereitzustellen. Wenn der Durchflussbereich der Ventileinrichtung vorgeschaltet ist, dann kann, auch wenn die Ventileinrichtung gesperrt ist, eine Messung durchgeführt werden. Es lässt sich dann beispielsweise vor Anschalten eines Rotationsantriebs ermitteln, ob die Tankeinrichtung für Reinigungsflüssigkeit ausreichend befüllt ist. Wenn beispielsweise detektiert wird, dass sich in dem Durchflussbereich keine Flüssigkeit befindet, dann kann ein Anschalten der Flächen-Reinigungsmaschine und damit eines Rotationsantriebs verhindert werden.

Konstruktiv günstig ist es, wenn der Durchflussbereich an dem Halter angeordnet ist. Insbesondere ist der Durchflussbereich als Rohr oder Schlauch ausgebildet, welcher an dem Halter sitzt.

Bei einer konstruktiv einfachen Ausführungsform ist die Sensoreinrichtung als Widerstandsmesseinrichtung ausgebildet. Es lässt sich dann insbesondere prüfen, ob ein erster Widerstandszustand mit hohem Widerstand oder ein zweiter Widerstandszustand mit einem relativ zum hohen Widerstand niedrigen Widerstand vorliegt. Der erste Widerstandszustand zeigt einen nicht mit Flüssigkeit befüllten Durchflussbereich an. Der zweite Widerstandszustand charakterisiert einen Durchflussbereich, in welchem sich eine Flüssigkeit befindet. Daraus wiederum lässt sich auf den Befüllungsgrad der Tankeinrichtung für Reinigungsflüssigkeit schließen; es lässt sich zumindest die Aussage treffen, dass sich keine Reinigungsflüssigkeit mehr in der Tankeinrichtung für Reinigungsflüssigkeit befindet, oder dass noch Reinigungsflüssigkeit vorhanden ist.

Bei einer konstruktiv einfachen Ausführungsform ist eine Beaufschlagung der Elektrodeneinrichtung mit einem Gleichstrom oder einer Gleichspannung vorgesehen. Über ein Reaktionssignal, welches insbesondere ein Spannungssignal oder Stromsignal ist, lässt sich dann zumindest indirekt eine Widerstandsermittlung durchführen.

Konstruktiv günstig ist es, wenn die Sensoreinrichtung eine erste Elektrode und eine zu der ersten Elektrode beabstandete zweite Elektrode umfasst, wobei die erste Elektrode und die zweite Elektrode in den Durchflussbereich ragen. Ein elektrischer Widerstand zwischen der ersten Elektrode und der zweiten Elektrode hängt davon ab, ob sich Flüssigkeit zwischen der ersten Elektrode und der zweiten Elektrode befindet. Wenn sich Reinigungsflüssigkeit zwischen der ersten Elektrode und der zweiten Elektrode befindet, dann ergibt sich ein geringer Widerstand. Wenn sich keine Flüssigkeit zwischen der ersten Elektrode und der zweiten Elektrode befindet, dann ergibt sich ein hoher Widerstand, der idealisiert als unendlich angesehen werden kann. Aus einer Widerstandsermittlung lässt sich somit bestimmen, ob Flüssigkeit vorhanden ist oder nicht.

Insbesondere sitzen die erste Elektrode und die zweite Elektrode in einer Wandung des Durchflussbereichs und sind insbesondere eingespritzt. Es lässt sich dadurch auf einfache Weise ein fluiddichter Durchflussbereich mit integrierter Sensoreinrichtung ausbilden.

Konstruktiv günstig ist es, wenn die erste Elektrode und/oder die zweite Elektrode als Metallstifte ausgebildet sind.

Ganz besonders vorteilhaft ist es, wenn über die Sensoreinrichtung ermittelbar ist, ob die Tankeinrichtung für Reinigungsflüssigkeit leer ist, wobei über die Abwesenheit von Reinigungsflüssigkeit in dem Durchflussbereich auf eine Entleerung der Tankeinrichtung für Reinigungsflüssigkeit geschlossen wird. Es lässt sich dadurch die entsprechende Überprüfung außerhalb der Tankeinrichtung für Reinigungsflüssigkeit durchführen. Dadurch lässt sich die Tankeinrichtung für Reinigungsflüssigkeit auf einfache Weise abnehmbar ausbilden. Die Überprüfung lässt sich im Wesentlichen lageunabhängig durchführen. Ein Schwappen von Reinigungsflüssigkeit in der Tankeinrichtung hat keine wesentlichen Auswirkungen auf das Überprüfungsergebnis.

Günstig ist es, wenn die Sensoreinrichtung signalwirksam mit einer Auswerteeinrichtung verbunden ist, wobei insbesondere mindestens eines der Folgenden vorgesehen ist:
- die Auswerteeinrichtung ermittelt aus Sensordaten der Sensoreinrichtung einen Befüllungsgrad der Tankeinrichtung für Reinigungsflüssigkeit;
- die Auswerteeinrichtung steuert die Sensoreinrichtung an;
- die Auswerteeinrichtung ist signalwirksam mit einer Anzeigeeinrichtung und/oder einem Sender verbunden;
- die Auswerteeinrichtung initiiert ein Warnsignal, wenn die Tankeinrichtung für Reinigungsflüssigkeit als leer detektiert wird;
- die Auswerteeinrichtung schaltet einen Rotationsantrieb für die mindestens eine Reinigungswalzeneinheit ab, wenn die Tankeinrichtung für Reinigungsflüssigkeit als leer detektiert wird;
- die Auswerteeinrichtung verhindert das Einschalten eines Rotationsantriebs für die mindestens eine Reinigungswalze, wenn bei Inbetriebnahme der Flächen-Reinigungsmaschine die Tankeinrichtung für Reinigungsflüssigkeit als leer detektiert wird.

Die Auswerteeinrichtung stellt beispielsweise ein Beaufschlagungssignal für die Sensoreinrichtung wie ein Gleichspannungssignal bereit. Sie ermittelt dann insbesondere ein Reaktionssignal, über welches auf eine Flüssigkeitsbefüllung in dem Durchflussbereich geschlossen werden kann.

Durch die Anzeigeeinrichtung kann einem Bediener angezeigt werden, ob die Tankeinrichtung leer ist oder nicht, und es kann beispielsweise ein Warnsignal ausgegeben werden. Durch die signalwirksame Verbindung der Auswerteeinrichtung mit einem Sender können entsprechende Anzeigesignale oder auch Warnsignale beispielsweise an eine Fernbedienung oder an ein mobiles Gerät wie ein Smartphone übertragen werden.

Günstig ist es, wenn die Anzeigeeinrichtung an einem Haltegriff angeordnet ist, über welchen der Reinigungskopf durch einen Bediener führbar ist, und/oder an dem Reinigungskopf angeordnet ist. Dadurch lässt sich für einen Bediener auf einfache Weise erkennen, wie der Zustand der Tankeinrichtung für Reinigungsflüssigkeit ist. Beispielsweise wird ein optisches und/oder akustisches Warnsignal über die Anzeigeeinrichtung abgegeben.

Die nachfolgende Beschreibung bevorzugter Ausführungsformen dient im Zusammenhang mit den Zeichnungen der näheren Erläuterung der Erfindung. Es zeigen:
- Figur 1: ein erstes Ausführungsbeispiel einer erfindungsgemäßen Flächen-Reinigungsmaschine in perspektivischer Darstellung;
- Figur 2: eine Teilschnittansicht in der Schnittebene E der Flächen-Reinigungsmaschine gemäß Figur 1;
- Figur 3: eine vergrößerte Darstellung des Bereichs A gemäß Figur 2;
- Figur 4: eine perspektivische Darstellung eines zweiten Ausführungsbeispiels einer erfindungsgemäßen Flächen-Reinigungsmaschine;
- Figur 5: eine vergrößerte Darstellung eines Reinigungskopfs der Flächen-Reinigungsmaschine gemäß Figur 4;
- Figur 6: eine Schnittansicht des Reinigungskopfs gemäß Figur 5;
- Figur 7: eine Unteransicht des Reinigungskopf gemäß Figur 5 mit abgenommener Tankeinrichtung für Schmutzfluid;
- Figur 8: eine schematische Schnittansicht eines dritten Ausführungsbeispiels einer erfindungsgemäßen Flächen-Reinigungsmaschine; und
- Figur 9: eine schematische Darstellung einer Auswerteeinrichtung mit einer Sondeneinrichtung zur Ermittlung, ob eine Tankeinrichtung für Reinigungsflüssigkeit leer ist, und mit einer Sensoreinrichtung zur Ermittlung eines Befüllungsgrads einer Tankeinrichtung für Schmutzfluid.

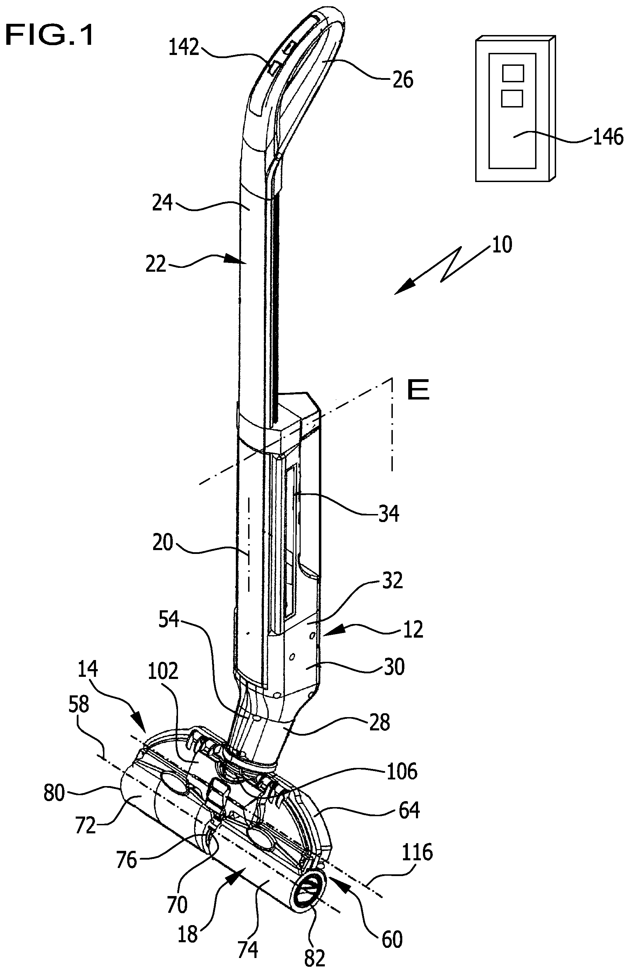

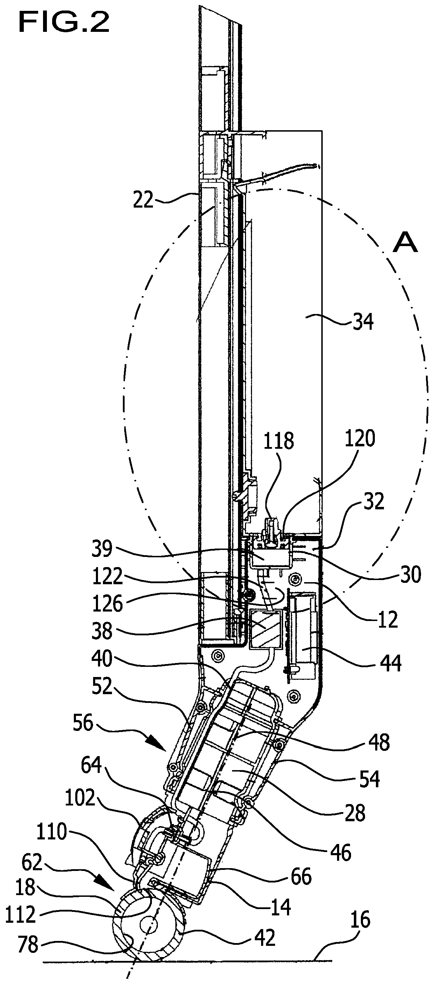

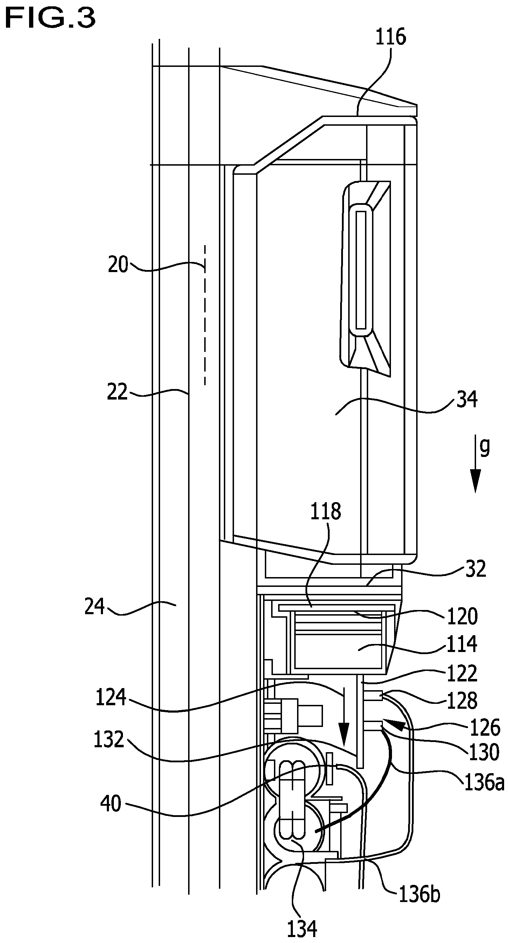

Ein erstes Ausführungsbeispiel einer erfindungsgemäßen Flächen-Reinigungsmaschine, welches in Figur 1 gezeigt ist und in den Figuren 2, 3 in Teildarstellung gezeigt ist und mit 10 bezeichnet ist, ist insbesondere als handgehaltene und handgeführte Boden-Reinigungsmaschine für Hartböden ausgebildet.

Die Flächen-Reinigungsmaschine 10 umfasst einen Gerätekörper 12 und einen Reinigungskopf 14. Der Reinigungskopf 14 ist an dem Gerätekörper 12 angeordnet.

Bei einem Reinigungsvorgang an einer zu reinigenden Fläche 16 stützt sich die Flächen-Reinigungsmaschine 10 über eine Reinigungswalzeneinheit 18 und insbesondere eine einzige Reinigungswalzeneinheit 18 an der zu reinigenden Fläche 16 ab. Die Reinigungswalzeneinheit 18 weist eine einzige Rotationsachse auf (siehe unten). Die Reinigungswalzeneinheit 18 ist eine Reinigungswalze, die einteilig oder mehrteilig sein kann. Bei der unten beschriebenen Ausführungsform ist die Reinigungswalzeneinheit 18 eine zweiteilige Reinigungswalze.

Der Gerätekörper 12 weist eine Längsachse 20 auf. Die Flächen-Reinigungsmaschine 10 ist stielgehalten beziehungsweise stielgeführt. Dazu sitzt an dem Gerätekörper 12 eine Haltestabeinrichtung 22.

Bei einem Ausführungsbeispiel umfasst die Haltestabeinrichtung 22 einen (insbesondere genau einen) Haltestab 24, welcher eine Längserstreckung parallel zur Längsachse 20 aufweist. An einem oberen Bereich der Haltestabeinrichtung 22 ist ein (Hand-)Griff 26 und insbesondere ein Bügelgriff angeordnet. Ein Bediener kann an diesem Griff 26 einhändig die Flächen-Reinigungsmaschine 10 halten und auf der zu reinigenden Fläche 16 (mit aufgestützter Reinigungswalzeneinheit 18) führen.

Die Haltestabeinrichtung 22 kann bezüglich einer Länge in der Längsachse 20 längenveränderlich oder längenfest ausgebildet sein.

Die Flächen-Reinigungsmaschine 10 ist in ihren Abmessungen so ausgebildet, dass bei auf der zu reinigenden Fläche 16 aufgestützter Reinigungswalzeneinheit 18 ein Bediener ein Reinigungsvorgang an der zu reinigenden Fläche 16 bequem mit einem abgewinkelten Haltearm durchführen kann. Insbesondere liegt eine Länge der Flächen-Reinigungsmaschine 10 in der Längsachse 20 zwischen der Reinigungswalzeneinheit 18 und dem Bügelgriff 26 in einem Bereich zwischen 60 cm und 130 cm.

An dem Griff 26 sind insbesondere ein oder mehrere Bedienungselemente und Anzeigeelemente (siehe unten) angeordnet. Beispielsweise ist ein Schalter angeordnet, über den die Flächen-Reinigungsmaschine 10 für einen Reinigungsbetrieb einschaltbar beziehungsweise ausschaltbar ist. Durch diesen Schalter ist der Betrieb eines Antriebsmotors 28 für einen Rotationsbetrieb der Reinigungswalzeneinheit 18 schaltbar. Ferner kann ein Schalter zur Betätigung einer Ventileinrichtung 38 (siehe unten) vorgesehen sein.

Der Gerätekörper 12 umfasst ein Gehäuse 30, in welchem Komponenten der Flächen-Reinigungsmaschine 10 geschützt angeordnet sind.

An dem Gehäuse 30 ist ein Halter 32 angeordnet. An dem Halter 32 ist eine Tankeinrichtung 34 für Reinigungsflüssigkeit (insbesondere Frischwasser mit oder ohne einem zusätzlichen Reinigungsmittel) abnehmbar angeordnet.

Bei einer Ausführungsform umfasst die Tankeinrichtung 34 einen einzigen Tank mit insbesondere einer einzigen Kammer zur Aufnahme von Reinigungsflüssigkeit.

In dem Gehäuse 30 ist eine Ventileinrichtung 38 positioniert.

Von der Ventileinrichtung 38 führen eine oder mehrere Fluidleitungen 40 zu dem Reinigungskopf 14.

Die Ventileinrichtung 38 weist ein Sperrventil auf, über welches die Zufuhr von Reinigungsflüssigkeit aus der Tankeinrichtung 34 zu dem Reinigungskopf 14 schaltbar sperrbar ist. Der Ventileinrichtung 38 kann eine Filtereinrichtung 39 für Reinigungsflüssigkeit zugeordnet sein. Die Filtereinrichtung 39 ist insbesondere dem Sperrventil vorgeschaltet und zwischen der Ventileinrichtung 38 und der Tankaufnahme 36 angeordnet.

Bei offenem Sperrventil kann Reinigungsflüssigkeit aus der Tankeinrichtung 34 durch die Fluidleitung oder Fluidleitungen 40 zu dem Reinigungskopf 14 strömen und die zu reinigende Fläche 16 beaufschlagen.

An dem Reinigungskopf 14 sind dazu eine oder mehrere Auslassmündungen für Reinigungsflüssigkeit vorgesehen. Es ist dabei grundsätzlich möglich, dass die Auslassmündung oder Auslassmündungen so angeordnet sind, dass die zu reinigende Fläche 16 direkt mit Reinigungsflüssigkeit beaufschlagt wird.

Bei einer vorteilhaften Variante sind die Auslassmündung oder Auslassmündungen so angeordnet, dass die Reinigungswalzeneinheit 18 und insbesondere ein Besatz 42 der Reinigungswalzeneinheit 18 mit Reinigungsflüssigkeit beaufschlagt wird. Bei einer Beaufschlagung der Reinigungswalzeneinheit 18 über Reinigungsflüssigkeit wird dann die zu reinigende Fläche 16 indirekt mit Reinigungsflüssigkeit beaufschlagt.

Der Besatz 42 ist insbesondere aus einem textilen Material hergestellt.

Der Ventileinrichtung 38 ist ein Schalter zugeordnet, durch welchen der Benutzer einstellen kann, ob das Sperrventil der Ventileinrichtung 38 gesperrt ist (das heißt der Zufluss von Reinigungsflüssigkeit zu dem Reinigungskopf 14 gesperrt ist), oder ob das Sperrventil offen ist (das heißt der Zufluss für Reinigungsflüssigkeit aus der Tankeinrichtung 34 zu dem Reinigungskopf 14 freigegeben ist).

Dieser Schalter kann an dem Gehäuse 30 angeordnet sein. Es ist grundsätzlich auch möglich, dass der Schalter an dem Griff 26 angeordnet ist.

Bei einem Ausführungsbeispiel ist in dem Gehäuse 30 eine Batterieeinrichtung 44 zur elektrischen Energieversorgung des Antriebsmotors 28 angeordnet. Die Batterieeinrichtung 44 ist wiederaufladbar. Dadurch lässt sich die Flächen-Reinigungsmaschine 10 unabhängig von einer Netzversorgung betreiben.

Es ist aber grundsätzlich auch möglich, dass die Flächen-Reinigungsmaschine 10 über Netzstrom betrieben wird. Es ist dann eine entsprechende Anschlusseinrichtung für Netzstrom an der Flächen-Reinigungsmaschine 10 angeordnet.

Die Batterieeinrichtung 44 kann dabei abnehmbar von dem Gerätekörper 12 sein, um an einem entsprechenden Ladegerät eine Wiederaufladung durchführen zu können.

Es kann auch vorgesehen sein, dass in den Gerätekörper 12 eine entsprechende Ladeeinrichtung integriert ist und eine Wiederaufladung ohne Entfernen der Batterieeinrichtung 44 von dem Gerätekörper 12 durchführbar ist. Entsprechende Anschlussbuchsen sind beispielsweise an dem Haltestab 24 angeordnet.

Der Antriebsmotor 28 ist ein Elektromotor. Er weist eine Motorachse 46 auf. Die Motorachse 46 ist koaxial zu einer Rotationsachse des Antriebsmotors 28.

Der Antriebsmotor 28 sitzt zwischen dem Reinigungskopf 14 und dem Gehäuse 30 an dem Gerätekörper 12.

Bei einem Ausführungsbeispiel ist die Motorachse 46 in einem Winkel zu der Längsachse 20 des Gerätekörpers 12 (und des Haltestabs 24) orientiert. Der Winkel zwischen der Motorachse 46 und der Längsachse 20 liegt beispielsweise im Bereich zwischen 150° und 170°.

Bei einem Ausführungsbeispiel ist der Reinigungskopf 14 um eine Schwenkachse 48 schwenkbar.

Insbesondere ist die Schwenkachse 48 koaxial zu der Motorachse 46.

Bei einer Ausführungsform ist der Antriebsmotor 28 an einer Innenhülse 52 angeordnet. Diese Innenhülse 52 bildet vorzugsweise eine Kapselung des Antriebsmotors 28.

An dem Gerätekörper 12 sitzt fest eine Außenhülse 54. Die Innenhülse 52 sitzt in der Außenhülse 54. Die Innenhülse 52 ist dabei um die Schwenkachse 48 relativ zu der Außenhülse 54 schwenkbar, wobei die Innenhülse 52 in der Außenhülse 54 schwenkbar gelagert ist. Die Innenhülse 52 und die Außenhülse 54 bilden ein Schwenklager 56 für die Schwenkbarkeit des Reinigungskopfes 14 relativ zu dem Gerätekörper 12. Der Antriebsmotor 28 ist dabei um die Schwenkachse 48 relativ zu dem Gerätekörper 12 schwenkbar. Entsprechende Zuleitungen von der Batterieeinrichtung 44 zu dem Antriebsmotor 28 sind so angeordnet und ausgebildet, dass sie die Schwenkbarkeit erlauben. Entsprechend sind die Fluidleitung 40 oder die Fluidleitungen 40 so ausgebildet, dass sie diese Schwenkbarkeit erlauben.

Das Schwenklager 56 weist eine Grundstellung auf, welche beispielsweise dadurch definiert ist, dass (die einzige) eine Rotationsachse 58 der Reinigungswalzeneinheit 18 senkrecht zu der Ebene E gemäß Figur 1 orientiert ist.

Eine Verschwenkung um die Schwenkachse 58 gegenüber dieser Grundstellung äußert sich in einer Winkelstellung der Rotationsachse 58 zu der Ebene E.

Das Schwenklager 56 ist insbesondere derart eingestellt, dass ein bezogen auf einen normalen Reinigungsbetrieb besonderer Kraftaufwand notwendig ist, um eine Verschwenkung des Reinigungskopfes 14 aus seiner Grundstellung zu bewirken.

Die Schwenkbarkeit des Reinigungskopfes 14 um die Schwenkachse 48 ermöglicht verbesserte Reinigungsmöglichkeiten auch an schwerer zugänglichen Stellen, indem gewissermaßen der Gerätekörper 12 mit der Haltestabeinrichtung 22 gegenüber der zu reinigenden Fläche 16 "umpositioniert" werden kann.

Der Reinigungskopf 14 weist einen Reinigungswalzenhalter 60 auf, an welchem die Reinigungswalzeneinheit 18 um die Rotationsachse 58 rotierbar sitzt. Der Reinigungswalzenhalter 60 ist drehfest mit der Innenhülse 52 verbunden.

Der Reinigungswalzenhalter 60 weist einen Haltebereich 62 für die Reinigungswalzeneinheit 18 auf, und eine Aufnahmekammer 64 für eine Tankeinrichtung 66 für Schmutzfluid.

Die Aufnahmekammer 64 ist zwischen dem Haltebereich 62 und der Innenhülse 52 positioniert. Die Innenhülse 52 ist insbesondere mit einer Außenseite der Aufnahmekammer 64 fest verbunden.

Die Reinigungswalzeneinheit 18 ist über eine Getriebeeinrichtung drehmomentwirksam an den Antriebsmotor 28 gekoppelt.

Die Getriebeeinrichtung verbindet drehmomentwirksam eine Motorwelle des Antriebsmotors 28 (welche um die Motorachse 46 rotiert) mit einer Welle 70 für die Reinigungswalzeneinheit 18.

Die Getriebeeinrichtung umfasst bei einem Ausführungsbeispiel einen Drehzahluntersetzer. Dieser dient zu einer Herabsetzung einer Drehzahl im Vergleich zur Drehzahl der Motorwelle. Beispielsweise weist ein Standard-Elektromotor Drehzahlen in der Größenordnung von 7000 Umdrehungen pro Minute auf. Der Drehzahluntersetzer sorgt für eine Herabsetzung der Drehzahl auf beispielsweise circa 400 Umdrehungen pro Minute.

Der Drehzahluntersetzer kann in der Innenhülse 52 oder außerhalb der Innenhülse 52 an dem Reinigungswalzenhalter 60 angeordnet sein.

Der Drehzahluntersetzer ist beispielsweise als Planetenradgetriebe ausgebildet.

Die Getriebeeinrichtung weist ferner ein Winkelgetriebe auf, welches für eine Drehmomentumlenkung sorgt, um einen Antrieb der Reinigungswalzeneinheit 18 mit der Rotationsachse 58 quer (und insbesondere senkrecht) zur Motorachse 46 zu bewirken. Das Winkelgetriebe ist insbesondere dem Drehzahluntersetzer nachgeschaltet.

Bei einem Ausführungsbeispiel weist das Winkelgetriebe ein oder mehrere Zahnräder auf, welche drehfest an eine entsprechende Welle des Drehzahluntersetzers gekoppelt sind. Diese wirken auf ein Kegelzahnrad zur Winkelumsetzung.

Die Getriebeeinrichtung umfasst bei einem Ausführungsbeispiel ferner einen Riemen, welcher drehmomentwirksam an das Winkelgetriebe gekoppelt ist und auf die Welle 70 wirkt. Der Riemen überbrückt den Abstand zwischen der Welle 70 und dem Winkelgetriebe und sorgt für eine Drehzahluntersetzung.

Bei einem Ausführungsbeispiel ist die Reinigungswalzeneinheit 18 zweiteilig ausgebildet mit einem ersten Teil 72 und einem zweiten Teil 74. Der erste Teil 72 sitzt drehfest an einer ersten Seite der Welle 70 und der zweite Teil 74 sitzt drehfest an einer der ersten Seite der Welle 70 gegenüberliegenden zweiten Seite.

In einem Zwischenbereich 76 zwischen dem ersten Teil 72 und dem zweiten Teil 74 ist die Getriebeeinrichtung geführt und an die Welle 70 angekoppelt. Sie weisen die gleiche Rotationsachse 58 auf.

Die Reinigungswalzeneinheit 18 beziehungsweise der erste Teil 72 und der zweite Teil 74 der Reinigungswalzeneinheit 18 weisen eine Hülse 78 auf, welche zylindrisch ausgebildet ist. An der Hülse 78 ist der Besatz 42 angeordnet. Über die Hülse 78 ist die Reinigungswalzeneinheit 18 beziehungsweise der erste Teil 72 und der zweite Teil 74 an der Welle 70 fixiert.

Die Reinigungswalzeneinheit 18 ist so an dem Reinigungskopf 14 angeordnet, dass die Rotationsachse 58 senkrecht zu der Längsachse 20 orientiert ist.

Die Reinigungswalzeneinheit 18 weist eine Länge längs der Rotationsachse 58 zwischen einer ersten Stirnseite 80 (welche an dem ersten Teil 72 gebildet ist) und einer zweiten Stirnseite 82 (welche an dem zweiten Teil 74 gebildet ist) auf, welche erheblich größer ist als eine entsprechende Breite des Gerätekörpers 12 senkrecht zu der Längsachse 20. Insbesondere liegt eine Länge der Reinigungswalzeneinheit 18 zwischen der ersten Stirnseite 80 und der zweiten Stirnseite 82 bei mindestens 20 cm und vorzugsweise bei mindestens 25 cm.

Die Aufnahmekammer 64 weist einen Boden auf. An dem Boden ist quer zu diesem orientiert eine Aufnahmekammerwandung angeordnet. Die Aufnahmekammerwandung und der Boden der Aufnahmekammer 64 definieren einen Aufnahmeraum für die Tankeinrichtung 66 für Schmutzfluid.

Dem Boden gegenüberliegend ist der Aufnahmeraum offen. Über eine entsprechende Seite ist die Schmutzfluidtankeinrichtung 66 aus dem Aufnahmeraum entnehmbar beziehungsweise in diesen einsetzbar. Eine Entnahmerichtung beziehungsweise Einsetzrichtung 92 ist im Wesentlichen senkrecht zu dem Boden (und senkrecht zu der Rotationsachse 58).

Der Aufnahmekammer 64 ist eine Fixierungseinrichtung zugeordnet, über welche die Tankeinrichtung 66 für Schmutzfluid an der Aufnahmekammerwandung in einer Halteposition fixierbar ist. Die Fixierung erfolgt insbesondere durch Formschluss.

Bei einer Ausführungsform umfasst die Fixierungseinrichtung 98 eine Klappe 102, welche um eine Schwenkachse mittels eines Schwenklagers 106 schwenkbar an dem Reinigungskopf 14 angeordnet ist. Das Schwenklager 106 ist dabei an oder in der Nähe der Innenhülse 52 positioniert.

Die Schwenkachse ist parallel zu der Rotationsachse 58 der Rotationswalze 18 orientiert.

In der Halteposition wirkt die Klappe 102 auf die Tankeinrichtung 66 für Schmutzfluid und hält diese an der Aufnahmekammer 64 in dem Aufnahmeraum.

Zur Entnahme der Tankeinrichtung 66 von dem Reinigungskopf 14 ist ausgehend von dieser Halteposition die Klappe 102 in Richtung des Gerätekörpers 12 schwenkbar, um die Tankeinrichtung 66 freizugeben, sodass diese in der Entnahmerichtung an der Seite aus dem Aufnahmeraum herausnehmbar ist und von dem Reinigungskopf 14 abnehmbar ist.

Bezüglich der weiteren Ausgestaltung der Flächen-Reinigungsmaschine 10 wird auf die WO 2017/153450 A1 verwiesen.

Der Reinigungskopf 14 weist eine Abstreif-Leiteinrichtung 110 auf, welche auf die Reinigungswalzeneinheit 18 (und dabei auf den ersten Teil 72 und den zweiten Teil 74) wirkt und dazu dient, von der Reinigungswalzeneinheit 18 mitgenommenes Schmutzfluid (insbesondere Wasser mit Schmutzpartikeln) zu lösen und einer Eingangsmündung 112 der Tankeinrichtung 66 für Schmutzfluid zuzuführen. Dadurch wird dann Schmutzfluid in die Schmutzfluidtankeinrichtung 66 eingekoppelt.

Die Abstreif-Leiteinrichtung 110 ist so ausgebildet, dass über sie Schmutzfluid von der Reinigungswalzeneinheit 18 abstreift und in die Eingangsmündung 112 leitet.

Es ist dabei möglich, dass bei rotierender Reinigungswalzeneinheit 18 ein Leiteffekt über die Wirkung der Zentrifugalkraft erzielt wird und gewissermaßen Schmutzfluid in die Schmutzfluidtankeinrichtung 66 geschleudert wird.

Die Abstreif-Leiteinrichtung 110 ist beabstandet zu der Rotationsachse 58.

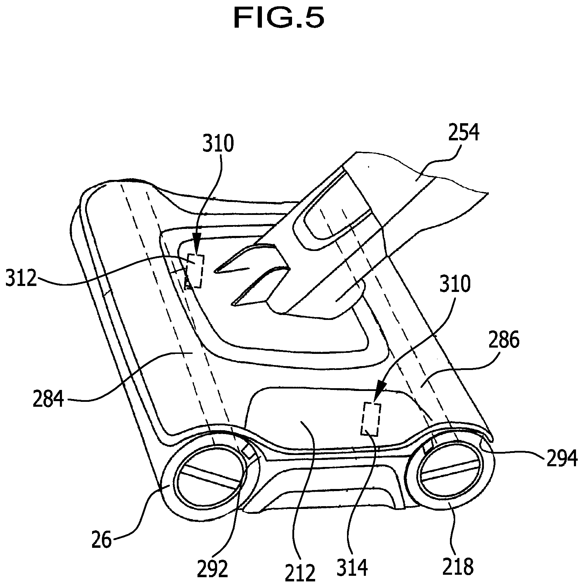

Bei einer Ausführungsform (vgl. beispielsweise Figur 5) ragt die Abstreif-Leiteinrichtung 110 mit einer Tiefe T in den Besatz 42 der Reinigungswalzeneinheit 18. Die Tiefe T liegt insbesondere mindestens bei 5 % einer Dicke D des Besatzes 42 der Reinigungswalzeneinheit 18 bezogen auf einen feuchten Zustand des Besatzes 42.

Die Abstreif-Leiteinrichtung 110 ist insbesondere durch ein oder mehrere Kantenelemente gebildet. Beispielsweise ist dem ersten Teil 72 und dem zweiten Teil 74 der Reinigungswalzeneinheit 18 ein jeweiliges Kantenelement zugeordnet.

Bezüglich der weiteren Ausgestaltung der Flächen-Reinigungsmaschine 10 wird auf die WO 2017/153450 A1 verwiesen.

Der Halter 32 für die Tankeinrichtung 34 für Reinigungsflüssigkeit weist einen Querbereich 114 auf (vergleiche Figur 3), welcher von dem Haltestab 24 bezogen auf die Längsachse 20 quer abragt. Auf diesen Querbereich 114 ist die Tankeinrichtung 34 aufsetzbar und an dem Querbereich 114 fixierbar, wobei eine zusätzliche Fixierung an dem Haltestab 24 vorgesehen sein kann. Bei einem Ausführungsbeispiel ist die Tankeinrichtung 34 so ausgestaltet, dass die Tankeinrichtung 34 zwischen dem Querbereich 114 und einem beabstandeten Haltesteg 116 einspannbar ist.

Die Tankeinrichtung 34 für Reinigungsflüssigkeit weist einen Ausgang 118 auf.

An dem Querbereich 114 ist ein Anschluss 120 für die Tankeinrichtung 34 angeordnet. Dieser Anschluss 120 ist mit dem Ausgang 118 fluidwirksam verbindbar, sodass über den Anschluss 120 Reinigungsflüssigkeit in das Gerät einkoppelbar ist. Der Anschluss 120 steht über einen Durchflussbereich 122 in fluidwirksamer Verbindung mit der Fluidleitung 40 bzw. der Durchflussbereich 122 kann als Teil der Fluidleitung 40 angesehen werden.

Der Durchflussbereich 122 ist bezogen auf eine Strömungsrichtung 124 für Reinigungsflüssigkeit, welche aus der Tankeinrichtung 34 in die Leitung 40 strömt, der Tankeinrichtung 34 für Reinigungsflüssigkeit nachgeordnet und dabei auch dem Anschluss 120 nachgeordnet.

Der Durchflussbereich 122 ist insbesondere durch einen Rohrbereich gebildet, welcher in den Halter 32 und dabei in den Querbereich 114 des Halters 32 integriert ist bzw. an diesem angeordnet ist. Insbesondere steht der Durchflussbereich 122 in direkter fluidwirksamer Verbindung mit dem Anschluss 120. Der Anschluss 120 bildet einen Eingang des Durchflussbereichs 122.

Der Rohrbereich ist insbesondere als starrer Rohrbereich ausgebildet.

An dem Durchflussbereich ist eine Sensoreinrichtung 126 angeordnet, welche prüft, ob Flüssigkeit (Reinigungsflüssigkeit) in dem Durchflussbereich 122 vorhanden ist. Wenn keine Reinigungsflüssigkeit in dem Durchflussbereich 122 vorhanden ist, dann bedeutet dies, dass die Tankeinrichtung 34 für Reinigungsflüssigkeit leer ist. Über die Anwesenheit von Reinigungsflüssigkeit in dem Durchflussbereich 122 kann der Befüllungszustand der Tankeinrichtung 34 für Reinigungsflüssigkeit mit Reinigungsflüssigkeit ermittelt werden, das heißt, es ist insbesondere detektierbar, ob die Tankeinrichtung 34 leer ist.

Es ist insbesondere vorgesehen, dass der Durchflussbereich 122 bezogen auf die Strömungsrichtung 124 für Reinigungsflüssigkeit der Ventileinrichtung 38 vorgeschaltet ist.

Es ist insbesondere vorgesehen, dass im Betrieb der Flächen-Reinigungsmaschine 10 Reinigungsflüssigkeit der Reinigungswalzeneinheit 18 schwerkraft-getrieben zugeführt wird. Es ist insbesondere keine Pumpe vorhanden, die Reinigungsflüssigkeit fördert.

Bei einer Ausführungsform ist der Durchflussbereich 122 der Filtereinrichtung 39 nachgeschaltet. Es kann aber auch eine Vorschaltung vor der Filtereinrichtung 39 vorgesehen sein.

Die Sensoreinrichtung 126 ist insbesondere als Widerstandsmesseinrichtung ausgebildet. Sie ist als Elektrodeneinrichtung ausgebildet. Sie umfasst dazu eine erste Elektrode 128 und eine zweite Elektrode 130. Die erste Elektrode 128 und die zweite Elektrode 130 sind beabstandet zueinander. Sie ragen in den Durchflussbereich 122, wobei sie (sofern Reinigungsflüssigkeit in dem Durchflussbereich 122 vorhanden ist) in Reinigungsflüssigkeit eingetaucht sind.

Bei einem Ausführungsbeispiel umfasst der Durchflussbereich 122 eine Wandung 132, wobei die erste Elektrode 128 und die zweite Elektrode 130 an der Wandung 132 angeordnet sind und insbesondere in dieser angeordnet sind.

Bei einer Ausführungsform sind die erste Elektrode 128 und die zweite Elektrode 130 als Metallstifte ausgebildet. Insbesondere sind die erste Elektrode 128 und die zweite Elektrode 130 in die Wandung eingespritzt bzw. eingepresst. Es ergibt sich dadurch ein fluiddichter Abschluss des Durchflussbereichs 122 an der ersten Elektrode 128 und der zweiten Elektrode 130.

Die erste Elektrode 128 und die zweite Elektrode 130 sind mit einer Auswerteeinrichtung 134 verbunden. Beispielsweise ist eine Verbindung über jeweilige Leitungen 136a, 136b vorgesehen.

Die Auswerteeinrichtung 134 funktioniert mit der Sensoreinrichtung 126 grundsätzlich wie folgt:

Zwischen der ersten Elektrode 128 und der zweiten Elektrode 130 wird eine Spannung und insbesondere Gleichspannung angelegt. Die Gleichspannung kann dabei permanent angelegt sein oder gepulst sein.

Wenn sich Flüssigkeit (Reinigungsflüssigkeit) in dem Durchflussbereich 122 befindet, dann ist der elektrische Widerstand zwischen der ersten Elektrode 128 und der zweiten Elektrode 130 relativ gering. Wenn sich keine Flüssigkeit in dem Durchflussbereich 122 befindet, dann liegt zwischen der ersten Elektrode 128 und der zweiten Elektrode 130 innerhalb des Durchflussbereichs 122 eine Luftbrücke.

Vorzugsweise ist die Wandung 132 aus einem Kunststoffmaterial hergestellt, welches ein elektrischer Isolator ist. Wenn also keine Flüssigkeit in dem Durchflussbereich 122 ist und damit auch keine Flüssigkeit zwischen der ersten Elektrode 128 und der zweiten Elektrode 130 ist, dann liegt ein hoher Widerstand vor. Aus einer Widerstandsermittlung lässt sich also ermitteln, ob sich Flüssigkeit im Durchflussbereich 122 befindet oder nicht. Wenn detektiert wird, dass keine Flüssigkeit im Durchflussbereich 122 ist, dann bedeutet dies, dass die Tankeinrichtung 34 für Reinigungsflüssigkeit entleert ist bzw. leer ist.

Es ist dabei insbesondere vorgesehen, dass bezogen auf einen ordnungsgemäßen Betrieb der Flächen-Reinigungsmaschine 10, bei dem diese über die Reinigungswalzeneinheit 18 auf der zu reinigenden Fläche 16 aufgestellt ist, der Durchflussbereich 122 bezogen auf die Gravitationsrichtung g unterhalb der Tankeinrichtung 34 für Reinigungsflüssigkeit und dabei unterhalb des Ausgangs 118 liegt.

Wenn die Ventileinrichtung 38 dem Durchflussbereich 122 nachgeordnet ist, dann bedeutet dies, dass für den ordnungsgemäßen Betrieb der Durchflussbereich 122 mit Flüssigkeit gefüllt ist, wenn die Tankeinrichtung 34 eingesetzt ist und genügend Flüssigkeit enthalten hat. Es lässt sich dadurch beispielsweise schon vor dem Einschalten des Rotationsantriebs (über den Antriebsmotor 28) prüfen, ob ausreichend Reinigungsflüssigkeit für einen Reinigungsbetrieb vorhanden ist.

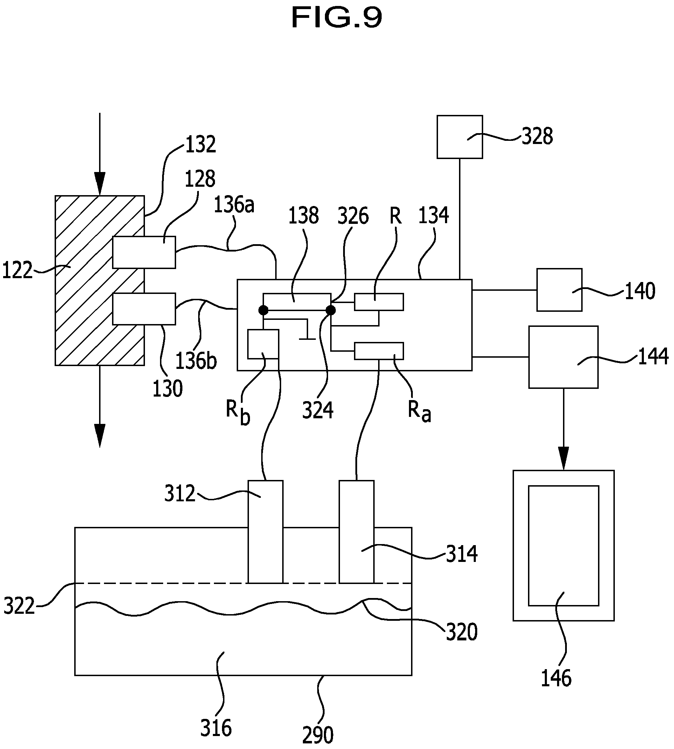

Die Auswerteeinrichtung 134 dient auch zur Ansteuerung der Sensoreinrichtung 126 mit den Elektroden 128, 130. Beispielsweise umfasst die Auswerteeinrichtung 134 dazu einen ASIC 138 (Figur 9).

Für einen Messbetrieb der Sensoreinrichtung 126 wird beispielsweise eine Gleichspannung (welche auch gepulst sein kann) zwischen der ersten Elektrode 128 und der zweiten Elektrode 130 angelegt. Eine abfallende Spannung wird als Reaktionssignal gemessen.

Zwischen der ersten Elektrode 128 und der zweiten Elektrode 130 liegt, wenn sich Flüssigkeit im Durchflussbereich 122 befindet, aufgrund dieses Mediums ein Widerstand. Wenn sich keine Flüssigkeit zwischen der ersten Elektrode 128 und der zweiten Elektrode 130 befindet, dann kann dieser Widerstand idealisiert als unendlich groß angesehen werden.

Wenn sich Flüssigkeit zwischen den Elektroden 128, 130 befindet, dann kann ein Strom fließen. Dadurch ist der Widerstand endlich. Durch einfache Schwellenwertprüfung bezüglich des Widerstands lässt sich dann über die Auswerteeinrichtung 134 die Anwesenheit von Flüssigkeit in dem Durchflussbereich 122 ermitteln.

Die Sensoreinrichtung 126 ist signalwirksam mit der Auswerteeinrichtung 134 verbunden. Die Auswerteeinrichtung 134 ist signalwirksam mit einer Anzeigeeinrichtung 140 verbunden. Die Anzeigeeinrichtung 140 umfasst eine optische und/oder akustische Anzeige. Bei einem Ausführungsbeispiel umfasst die Anzeigeeinrichtung 140 eine optische Anzeige 142, welche an dem Griff 26 angeordnet ist.

Die optische Anzeige 142 zeigt beispielsweise über Blinken oder dergleichen an, dass die Tankeinrichtung 34 für Reinigungsflüssigkeit leer ist.

Alternativ oder zusätzlich ist die Auswerteeinrichtung 134 signalwirksam mit einem Sender 144 verbunden. Über den Sender 144 lassen sich entsprechende Signale und insbesondere Warnsignale bzw. Anzeigesignale an eine Fernbedienung 146 oder ein mobiles Gerät wie ein Smartphone senden. Dieses kann dann für eine entsprechende Warnanzeige sorgen bzw. an diesem lässt sich ablesen, ob der Befüllungsgrad der Tankeinrichtung 34 für Reinigungsflüssigkeit ausreichend ist oder nicht.

Durch die Sensoreinrichtung 126 lässt sich auf einfache Weise ein Leerzustand der Tankeinrichtung 34 für Reinigungsflüssigkeit erkennen und über die Anzeigeeinrichtung 140 lässt sich der entsprechende Zustand auf einfache Weise einem Bediener mitteilen. Diese Ermittlung ist dabei aufgrund der Anordnung des Durchflussbereichs 122 unterhalb des Anschlusses 120 im Wesentlichen lageunabhängig.

Der Durchflussbereich 122 ist an dem Querbereich 114 des Halters 32 angeordnet und insbesondere fest mit ihm verbunden. Dadurch lässt sich das System mit der Sensoreinrichtung 126 auf konstruktiv einfache Weise ausgestalten. Kein Teil der Sensoreinrichtung 126 muss beweglich ausgebildet werden, das heißt eine Abnahme der Tankeinrichtung 34 für Reinigungsflüssigkeit muss konstruktiv für die Sensoreinrichtung 126 nicht berücksichtigt werden. Eine Schwappung von Flüssigkeit in der Tankeinrichtung 34 für Reinigungsflüssigkeit sowie ein lageabhängiger Flüssigkeitspegel in der Tankeinrichtung 34 für Reinigungsflüssigkeit beeinflusst die Sensoreinrichtung 126 nicht.

Die Sensoreinrichtung 126 ist dabei außerhalb der Tankeinrichtung 34 für Reinigungsflüssigkeit angeordnet. Ein Strom zwischen der ersten Elektrode 128 und der zweiten Elektrode 130 bricht zusammen, wenn die Tankeinrichtung 34 für Reinigungsflüssigkeit leer ist und dadurch in dem Durchflussbereich 122 sich keine Flüssigkeit mehr befindet.

Über die Auswerteeinrichtung 134 ist dabei Folgendes möglich:
Wenn vor Inbetriebnahme des Rotationsantriebs erkannt wird, dass die Tankeinrichtung 34 für Reinigungsflüssigkeit leer ist, dann kann ein Rotationsantrieb der Reinigungswalzeneinheit 18 über die Auswerteeinrichtung 134 verhindert werden.

Wenn während des Betriebs der Flächen-Reinigungsmaschine 10 (mit rotierender Reinigungswalzeneinheit 18) erkannt wird, dass sich die Tankeinrichtung 34 für Reinigungsflüssigkeit entleert hat, dann kann die Auswerteeinrichtung 134 über die Anzeigeeinrichtung 140 bzw. über den Sender 144 ein entsprechendes Anzeigesignal und insbesondere Warnsignal initiieren.

Wenn eine Entleerung der Tankeinrichtung 34 für Reinigungsflüssigkeit im laufenden Betrieb erkannt wird, dann kann die Auswerteeinrichtung 134 für eine Abschaltung der Rotation der Reinigungswalzeneinheit 18 durch entsprechende Ansteuerung des Antriebsmotors 28 sorgen. Dadurch wird beispielsweise eine Beschädigung einer zu reinigenden Fläche 16 verhindert.

Die Flächen-Reinigungsmaschine 10 funktioniert wie folgt:
In einem Reinigungsbetrieb ist die Schmutzfluidtankeinrichtung 66 an dem Reinigungskopf 14 in der Halteposition fixiert.

Für einen Reinigungsvorgang wird die Flächen-Reinigungsmaschine 10 allein über die Reinigungswalzeneinheit 18 auf der zu reinigenden Fläche 16 aufgesetzt. Der Antriebsmotor 28 treibt die Reinigungswalzeneinheit 18 in einer Rotationsbewegung um die (einzige) Rotationsachse 58 in der Rotationsrichtung 158 an.

Die Reinigungswalzeneinheit 18 wird mit Reinigungsflüssigkeit aus der Tankeinrichtung 34 beaufschlagt.

Schmutz an der zu reinigenden Fläche 16 wird, wenn der angefeuchtete Besatz 42 der Reinigungswalzeneinheit 18 auf ihn wirkt, angefeuchtet, um dessen Lösbarkeit zu erleichtern.

Die Rotation der Reinigungswalzeneinheit 18 bewirkt eine mechanische Einwirkung auf Schmutz auf der zu reinigenden Fläche 16, um eine bessere Lösbarkeit von der zu reinigenden Fläche 16 zu erhalten.

Eventueller Grobschmutz kann mit einem Kehrelement der Reinigungswalzeneinheit 18 zugeführt werden.

Schmutzfluid (Schmutzpartikel, Reinigungsflüssigkeit mit gelöstem Schmutz) wird durch die Reinigungswalzeneinheit 18 mitgenommen und an der Abstreif-Leiteinrichtung 110 wird das Schmutzfluid von der Reinigungswalzeneinheit 18 gelöst und (unter anderem unter Wirkung der Zentrifugalkraft) in die Eingangsmündung 112 geleitet und gelangt von dort in die Tankeinrichtung 66 für Schmutzfluid. Die Abstreif-Leiteinrichtung 110 sorgt durch Abstreifen für eine Lösung von Schmutzfluid aus dem Besatz 42 der Reinigungswalzeneinheit 18.

Das Einkoppeln von Schmutzfluid in die Tankeinrichtung 66 für Schmutzfluid erfolgt insbesondere sauggebläsefrei.

Bei einer alternativen Ausführungsform ist es vorgesehen, dass Schmutzfluid von der Reinigungswalzeneinheit 18 über eine entsprechende Saugeinrichtung abgesaugt wird.

Über die Auswerteeinrichtung 134 mit der Sensoreinrichtung 126 ist erkennbar, ob die Tankeinrichtung 34 für Reinigungsflüssigkeit leer ist. Es können dann über die Auswerteeinrichtung 134 die entsprechenden Maßnahmen getroffen werden.

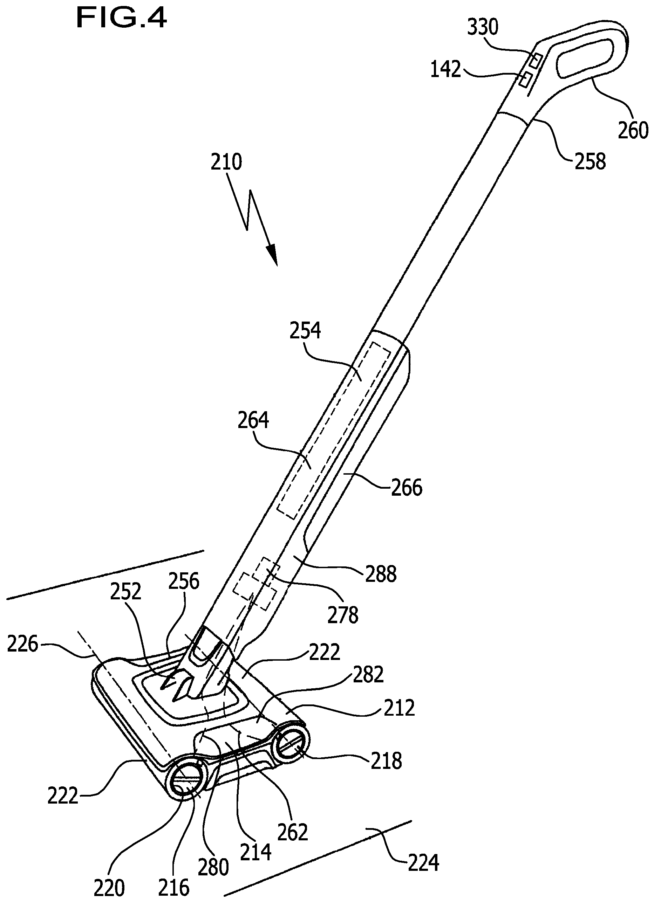

Ein zweites Ausführungsbeispiel einer Flächen-Reinigungsmaschine 210 (Figuren 4 bis 7) umfasst einen Reinigungskopf 212. Der Reinigungskopf 212 hat einen Kopfkörper 214. An dem Kopfkörper 214 sind eine erste Reinigungswalzeneinheit 216 und eine zweite Walzeneinheit in Form einer zweiten Reinigungswalzeneinheit 218 angeordnet, welche beabstandet zueinander sind.

Bei einem Ausführungsbeispiel sind die erste Reinigungswalzeneinheit 216 und die zweite Reinigungswalzeneinheit 218 einteilig ausgebildet, das heißt die jeweilige Reinigungswalzeneinheit ist durch eine einteilige Reinigungswalze gebildet.

Es ist grundsätzlich auch möglich, dass die erste Reinigungswalzeneinheit 216 und/oder die zweite Reinigungswalzeneinheit 218 mehrteilig ausgebildet sind und insbesondere jeweils zweiteilig ausgebildet sind.

Die erste Reinigungswalzeneinheit 216 und die zweite Reinigungswalzeneinheit 218 umfassen jeweils einen (zylindrischen) Träger 220, an welchem ein Besatz 222 aus einem textilen Material angeordnet ist. Über den Besatz 222 wirkt die Flächen-Reinigungsmaschine mit ihrem Reinigungskopf 212 auf eine zu reinigende Fläche 224.

Die erste Reinigungswalzeneinheit 216 ist um eine erste Rotationsachse 226 rotierend angetrieben (im Betrieb der Flächen-Reinigungsmaschine 210).

Die zweite Reinigungswalzeneinheit 218 ist im Betrieb um eine zweite Rotationsachse 228 rotierend angetrieben. Die erste Rotationsachse 226 und die zweite Rotationsachse 228 sind parallel beabstandet zueinander.

Wenn der Reinigungskopf 212 mit der ersten Reinigungswalzeneinheit 216 und der zweiten Reinigungswalzeneinheit 218 auf einer ebenen zu reinigenden Fläche 224 aufgesetzt ist, wobei er an der zu reinigenden Fläche 224 über die erste Reinigungswalzeneinheit 216 und die zweite Reinigungswalzeneinheit 218 abgestützt ist, dann sind die erste Rotationsachse 226 und die zweite Rotationsachse 228 jeweils parallel zu der zu reinigenden Fläche 224.

Die Flächen-Reinigungsmaschine 210 umfasst eine Antriebseinrichtung 230 zum jeweiligen Rotationsantrieb der ersten Reinigungswalzeneinheit 216 und der zweiten Reinigungswalzeneinheit 218.

Bei einem Ausführungsbeispiel umfasst die Antriebseinrichtung 230 einen ersten Antrieb 232, welcher die Rotationsbewegung der ersten Reinigungswalzeneinheit 216 antreibt, und einen zweiten Antrieb 234, welcher die Rotationsbewegung der zweiten Reinigungswalzeneinheit 218 antreibt.

Der erste Antrieb 232 und der zweite Antrieb 234 sind insbesondere durch Elektromotoren gebildet.

Der erste Antrieb 232 und der zweite Antrieb 234 ist insbesondere innerhalb des jeweiligen Trägers 220 der ersten Reinigungswalzeneinheit 216 bzw. der zweiten Reinigungswalzeneinheit 218 positioniert.

Es ist dann insbesondere vorgesehen, dass die erste Reinigungswalzeneinheit 216 und die zweite Reinigungswalzeneinheit 218 jeweils einteilig ausgebildet sind.

Es ist vorgesehen, dass die erste Reinigungswalzeneinheit 216 in einer ersten Rotationsrichtung 236 rotierend angetrieben ist, und die zweite Reinigungswalzeneinheit 218 in einer zweiten Rotationsrichtung 238 rotierend angetrieben ist. Die erste Rotationsrichtung 236 und die zweite Rotationsrichtung 238 sind dabei zueinander entgegengerichtet, das heißt die erste Reinigungswalzeneinheit 216 und die zweite Reinigungswalzeneinheit 218 sind gegenläufig angetrieben.

Die erste Rotationsrichtung 236 ist dabei derart, dass ein erster Bereich 240, mit welchem die erste Reinigungswalzeneinheit 216 auf die zu reinigende Fläche 224 gewirkt hat, zunächst auf einen Bereich 242 zu bewegt wird, welcher zwischen der ersten Reinigungswalzeneinheit 216 und der zweiten Reinigungswalzeneinheit 218 an dem Kopfkörper 214 liegt.

Entsprechend ist die zweite Rotationsrichtung 238 derart, dass ein zweiter Bereich 244, mit welchem die zweite Reinigungswalzeneinheit 218 auf die zu reinigende Fläche 224 gewirkt hat, auf den Bereich 242 an dem Kopfkörper 214 zu bewegt wird.

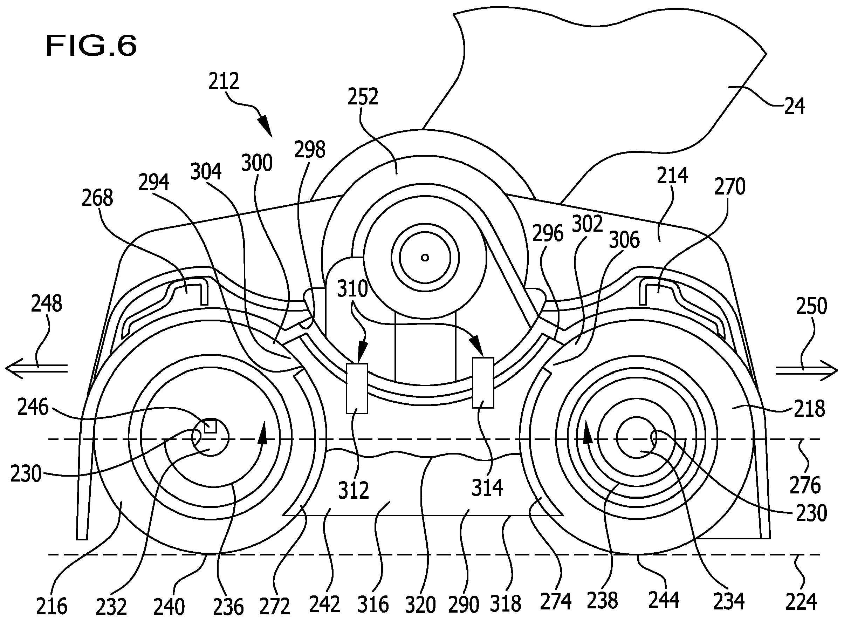

Bei einer Ausführungsform umfasst die Flächen-Reinigungsmaschine 210 eine Einstelleinrichtung (in Figur 6 durch das Bezugszeichen 246 angedeutet), mittels welcher eine Drehgeschwindigkeit der ersten Reinigungswalzeneinheit 216 in der ersten Rotationsrichtung 236 und/oder eine Drehgeschwindigkeit der zweiten Reinigungswalzeneinheit 218 in der zweiten Rotationsrichtung 238 durch einen Bediener einstellbar ist.

Wenn die Drehgeschwindigkeit der ersten Reinigungswalzeneinheit 216 und der zweiten Reinigungswalzeneinheit 218 gleich ist, dann erfährt der Reinigungskopf 212 aufgrund Rotation der Reinigungswalzeneinheit 216 und 218 keine Vorschubbewegung.

Wenn die Drehgeschwindigkeit der ersten Reinigungswalzeneinheit 216 größer ist als die Drehgeschwindigkeit der zweiten Reinigungswalzeneinheit 218, dann erfährt der Reinigungskopf 212 eine Vorschubbewegung in einer ersten Vorschubrichtung 248. Wenn die Drehgeschwindigkeit der zweiten Reinigungswalzeneinheit 218 größer ist als die Drehgeschwindigkeit der ersten Reinigungswalzeneinheit 216, dann erfährt der Reinigungskopf 212 eine Vorschubbewegung in einer zweiten Vorschubrichtung 250.

Die erste Vorschubrichtung 248 und die zweite Vorschubrichtung 250 sind entgegengerichtet zueinander.

Die erste Vorschubrichtung 248 und die zweite Vorschubrichtung 250 liegen quer und insbesondere im rechten Winkel zu den Rotationsachsen 226 und 228.

Über entsprechende Einstellung an der Einstelleinrichtung 246 lässt sich steuern, ob keine Vorschubbewegung vorliegt, oder eine Vorschubbewegung in der ersten Vorschubrichtung 248 oder der zweiten Vorschubrichtung 250.

An dem Reinigungskopf 212 ist über ein Gelenk 252 eine Haltestabeinrichtung 254 gehalten. Über das Gelenk 252 ist die Haltestabeinrichtung 254 um eine Schwenkachse 256 zu dem Reinigungskopf 212 schwenkbar, wenn der Reinigungskopf 212 mit seiner ersten Reinigungswalzeneinheit 216 und der zweiten Reinigungswalzeneinheit 218 auf der zu reinigenden Fläche 224 aufsteht.

Die Schwenkachse 256 liegt dabei parallel zu der ersten Rotationsachse 226 und der zweiten Rotationsachse 228.

Im Bereich eines proximalen Endes 258 sitzt an der Haltestabeinrichtung 254 ein (Hand-)Griff und insbesondere Bügelgriff 260. Im Bereich eines distalen Endes 262 ist die Haltestabeinrichtung über das Gelenk 252 an den Reinigungskopf 212 angelenkt.

Ein Bediener, welcher auf der zu reinigenden Fläche 224 hinter dem Reinigungskopf 212 aufsteht, kann mit einer Hand den Bügelgriff 260 fassen. Durch die Schwenkbarkeit der Haltestabeinrichtung 254 an dem Gelenk 252 ist ein Schwenkwinkel der Haltestabeinrichtung 254 zu der zu reinigenden Fläche 224 einstellbar und ein Bediener kann insbesondere diesen Schwenkwinkel entsprechend seiner Körpergröße einstellen.

Die Flächen-Reinigungsmaschine 210 ist an dem Bügelgriff 260 handgehalten und dabei handgeführt.

An der Haltestabeinrichtung 254 ist eine Batterieeinrichtung 264 angeordnet, welche insbesondere wiederaufladbar ist. Über die Batterieeinrichtung 264 wird die Antriebseinrichtung 230 mit elektrischer Energie versorgt.

Es ist grundsätzlich auch möglich, dass an der Haltestabeinrichtung ein Netzanschluss angeordnet ist, wobei dann die Antriebseinrichtung 230 über Netzstrom mit elektrischer Energie versorgbar ist.

Ferner ist an der Haltestabeinrichtung 254 eine Tankeinrichtung 266 für Reinigungsflüssigkeit angeordnet.

Von der Tankeinrichtung 266 führt jeweils mindestens ein Kanal durch die Haltestabeinrichtung 254 hindurch zu dem Reinigungskopf 212 und durch diesen hindurch zu einer ersten Auslassmündungseinrichtung 268, welcher der ersten Reinigungswalzeneinheit 216 zugeordnet ist, und einer zweiten Auslassmündungseinrichtung 270, welche der zweiten Reinigungswalzeneinheit 218 zugeordnet ist.

Der Tankeinrichtung 266 ist bei einer Ausführungsform eine Sensoreinrichtung entsprechend der Sensoreinrichtung 126 wie oben beschrieben zugeordnet.

Die erste Auslassmündungseinrichtung 268 ist dabei bezogen auf eine Höhenrichtung von der zu reinigenden Fläche 224 weg, wenn der Reinigungskopf 212 ordnungsgemäß auf dieser aufsteht, oberhalb der ersten Reinigungswalzeneinheit 216 angeordnet, und die zweite Auslassmündungseinrichtung 270 ist oberhalb der zweiten Reinigungswalzeneinheit 218 angeordnet.

Bei einem Ausführungsbeispiel ist der Tankeinrichtung 266 für Reinigungsflüssigkeit eine Ventileinrichtung zugeordnet, welche so ausgebildet ist, dass bei einem Betrieb der Antriebseinrichtung 230 diese automatisch öffnet und dadurch Reinigungsflüssigkeit aus der Tankeinrichtung 266 über die erste Auslassmündungseinrichtung 268 auf die erste Reinigungswalzeneinheit 216 strömt und über die zweite Auslassmündungseinrichtung 270 auf die zweite Reinigungswalzeneinheit 218 strömt.

Die erste Auslassmündungseinrichtung 268 und die zweite Auslassmündungseinrichtung 270 sind insbesondere so ausgebildet, dass entsprechend die erste Reinigungswalzeneinheit 216 bzw. die zweite Reinigungswalzeneinheit 218 über einen großen Längenbereich parallel zu der jeweiligen Rotationsachse 226, 228 mit Reinigungsflüssigkeit beaufschlagt wird.

Ein Bereich der ersten Reinigungswalzeneinheit 216, welcher über die erste Auslassmündungseinrichtung 268 mit Reinigungsflüssigkeit beaufschlagt wurde, rotiert in der ersten Rotationsrichtung 236 auf die zu reinigende Fläche 224 zu und bildet dann bei Beaufschlagung dieser zu reinigenden Fläche 224 den ersten Bereich 240. Die erste Reinigungswalzeneinheit 216 wirkt mechanisch auf die zu reinigende Fläche 224. Der "Flüssigkeitsgehalt" bewirkt eine Anlösung von Schmutz und damit eine verbesserte Reinigungswirkung.

Entsprechend rotiert ein angefeuchteter Bereich der zweiten Reinigungswalzeneinheit 218 in der zweiten Rotationsrichtung 238 auf zu reinigende Fläche 224 zu und bildet den zweiten Bereich 244 mit gleicher Funktionsweise wie anhand der ersten Reinigungswalzeneinheit 216 beschrieben.

Durch die erste Reinigungswalzeneinheit 216 wird nach Beaufschlagung der zu reinigenden Fläche 224 Schmutz in der ersten Rotationsrichtung 236 mitgenommen. Durch die zweite Reinigungswalzeneinheit 218 wird Schmutz in der zweiten Rotationsrichtung 238 mitgenommen.

Es ist grundsätzlich auch möglich, dass die Tankeinrichtung 266 an dem Reinigungskopf 212 angeordnet ist.

An dem Reinigungskopf 212 sitzt der ersten Reinigungswalzeneinheit 216 zugeordnet ein erstes Kehrelement 272. Weiterhin sitzt an dem Reinigungskopf 212 der zweiten Reinigungswalzeneinheit 218 zugeordnet ein zweites Kehrelement 274.

Das erste Kehrelement 272 und das zweite Kehrelement 274 ragen über den Kopfkörper 214 nach unten hinaus auf die zu reinigende Fläche 224 hin.

Die Aufgabe des ersten Kehrelements 272 ist es, Grobschmutz in Position zu halten, das heißt zu verhindern, dass er an einem Bereich von der ersten Reinigungswalzeneinheit 216 zu der zweiten Reinigungswalzeneinheit 218 gelangt. An dem ersten Kehrelement 272 lässt sich Grobschmutz gewissermaßen sammeln, welcher dann durch die Rotation der ersten Reinigungswalzeneinheit 216 in der ersten Rotationsrichtung 236 mitgenommen werden kann.

Das zweite Kehrelement 274 weist die gleiche Aufgabe bezogen auf die zweite Reinigungswalzeneinheit 218 auf.

Grundsätzlich ist es auch möglich, dass nur das erste Kehrelement 272 oder das zweite Kehrelement 274 vorhanden ist.

Bei einer Ausführungsform umfasst die Flächen-Reinigungsmaschine 210 eine Gebläseeinrichtung 278. Die Gebläseeinrichtung umfasst ein Gebläse und einen Antriebsmotor und insbesondere Elektromotor. Dieser Elektromotor wird über die Batterieeinrichtung 264 oder alternativ über Netzstrom mit elektrischer Energie versorgt. Die Gebläseeinrichtung 278 erzeugt einen Unterdruck zur Ausbildung eines Saugstroms.

Von der Gebläseeinrichtung 278 führen jeweils Kanäle 280, 282 zu einer ersten Einlassmündungseinrichtung 284 (Figur 4), welche der ersten Reinigungswalzeneinheit 216 zugeordnet ist bzw. zu einer zweiten Einlassmündungseinrichtung 286, welche der zweiten Reinigungswalzeneinheit 218 zugeordnet ist.

Durch den entsprechenden Saugstrom lässt sich Schmutzfluid von der ersten Reinigungswalzeneinheit 216 absaugen und über die erste Einlassmündungseinrichtung 284 auskoppeln. Ferner lässt sich Schmutzfluid von der zweiten Reinigungswalzeneinheit 218 absaugen und über die zweite Einlassmündungseinrichtung 286 auskoppeln.

Der Gebläseeinrichtung 278 ist eine Tankeinrichtung 288 für Schmutzfluid zugeordnet, in welche Schmutzfluid eingekoppelt wird.

Die Tankeinrichtung 288 kann an der Haltestabeinrichtung 254 insbesondere lösbar angeordnet sein.

Bei einer Ausführungsform ist die Tankeinrichtung 288 an dem Reinigungskopf 212 insbesondere zwischen der ersten Reinigungswalzeneinheit 216 und der zweiten Reinigungswalzeneinheit 218 angeordnet. Eine solche Tankeinrichtung ist in Figur 6 mit dem Bezugszeichen 290 angedeutet.

Die Schmutzfluidtankeinrichtung 288 bzw. 290 ist entsprechend fluidwirksam mit der Gebläseeinrichtung 278 verbunden, sodass Schmutzfluid in diese eingekoppelt werden kann.

Bei einem Ausführungsbeispiel ist die erste Einlassmündungseinrichtung 284 bezogen auf die erste Rotationsrichtung 236 der ersten Auslassmündungseinrichtung 268 vorgeschaltet, das heißt der erste Bereich 240, welcher auf die zu reinigende Fläche 224 gewirkt hat, wird zuerst an der ersten Einlassmündungseinrichtung 284 vorbeigeführt, bevor er an der ersten Auslassmündungseinrichtung 268 vorbeigeführt wird. Entsprechendes gilt dann für die zweite Reinigungswalzeneinheit 218 mit ihrem zweiten Bereich 244 im Zusammenhang mit der zweiten Einlassmündungseinrichtung 286.

Bezogen auf die erste Rotationsrichtung 236 ist die erste Einlassmündungseinrichtung 284 zwischen dem ersten Kehrelement 272 und der ersten Auslassmündungseinrichtung 268 angeordnet.

Bezogen auf die Rotationsrichtung 238 ist die zweite Einlassmündungseinrichtung 286 zwischen dem zweiten Kehrelement 274 und der zweiten Auslassmündungseinrichtung 270 angeordnet.

In Figur 5 ist die Position der ersten Einlassmündungseinrichtung 284 und der zweiten Einlassmündungseinrichtung 286 entsprechend angedeutet. Die erste Einlassmündungseinrichtung 284 weist in eine erste Aufnahme 292 des Reinigungskopfs 212, in welcher die erste Reinigungswalzeneinheit 216 angeordnet ist. Bezogen auf eine Höhenrichtung von der zu reinigenden Fläche 224 weg, wenn der Reinigungskopf 212 mit der ersten Reinigungswalzeneinheit 216 und der zweiten Reinigungswalzeneinheit 218 ordnungsgemäß auf der zu reinigenden Fläche aufgestellt ist, liegt die erste Einlassmündungseinrichtung 284 oberhalb der ersten Reinigungswalzeneinheit 216.

Die zweite Einlassmündungseinrichtung 286 ist entsprechend in Relation zu der zweiten Reinigungswalzeneinheit 218 angeordnet. Die zweite Reinigungswalzeneinheit 218 sitzt in einer zweiten Aufnahme 294 des Reinigungskopfs 212, und die zweite Einlassmündungseinrichtung 286 weist in diese zweite Aufnahme 294.

Es lässt sich dadurch direkt Schmutzfluid von der ersten Reinigungswalzeneinheit 216 bzw. zweiten Reinigungswalzeneinheit 218 absaugen.

Die erste Einlassmündungseinrichtung 284 und die zweite Einlassmündungseinrichtung 286 weisen dabei eine solche Mündungslänge parallel zu der ersten Rotationsachse 226 bzw. zweiten Rotationsachse 228 auf, dass ein entsprechend großer Längenbereich der ersten Reinigungswalzeneinheit 216 bzw. der zweiten Reinigungswalzeneinheit 218 absaugbar ist.

Es ist beispielsweise auch möglich, dass nur Einlassmündungseinrichtungen entsprechend den Einlassmündungseinrichtungen 296 und 298, welche neben der entsprechenden Reinigungswalzeneinheit 216 und 218 angeordnet sind, fluidwirksam mit der Gebläseeinrichtung 278 verbunden sind. Beispielsweise ist es möglich, dass der ersten Reinigungswalzeneinheit eine erste Einlassmündungseinrichtung 300 zugeordnet ist, und der zweiten Reinigungswalzeneinheit 218 eine zweite Einlassmündungseinrichtung 302 zugeordnet ist, welche direkt in die Tankeinrichtung 290 münden (Figur 6). Insbesondere ist dann der ersten Einlassmündungseinrichtung 200 und der zweiten Einlassmündungseinrichtung 202 ein jeweiliger Abstreifer 304 bzw. 306 zugeordnet, welcher Schmutzfluid von der ersten Reinigungswalzeneinheit 216 bzw. der zweiten Reinigungswalzeneinheit 218 abstreift, wobei sich dann Schmutzfluid über die erste Einlassmündungseinrichtung 296 bzw. die zweite Einlassmündungseinrichtung 298 direkt in die Tankeinrichtung 290 einkoppeln lässt, wobei dann insbesondere die erste Einlassmündungseinrichtung 300 und die zweite Einlassmündungseinrichtung 302 nicht mit der Gebläseeinrichtung 278 verbunden sind. Beispielsweise erfolgt dann eine Absaugung an den Einlassmündungseinrichtungen 296, 298 und eine direkte Abstreifungseinkopplung an den Einlassmündungseinrichtungen 300 und 302.

Für einen Betrieb der Flächen-Reinigungsmaschine 210 ist der Reinigungskopf 212 auf der zu reinigenden Fläche über die erste Reinigungswalzeneinheit 216 und die zweite Reinigungswalzeneinheit 218 aufgesetzt. Diese sind rotierend angetrieben in der ersten Rotationsrichtung 236 bzw. in der zweiten Rotationsrichtung 238. Durch eine unterschiedliche Drehgeschwindigkeit kann ein Vorschub in der Richtung 248 bzw. 250 eingestellt werden.

Die jeweilige Reinigungswalzeneinheit 216 bzw. 218 wird über Reinigungsflüssigkeit aus der Tankeinrichtung an der ersten Auslassmündungseinrichtung 268 bzw. der zweiten Auslassmündungseinrichtung 270 mit Reinigungsflüssigkeit beaufschlagt. Über den ersten Bereich 240 der ersten Reinigungswalzeneinheit 216 bzw. den zweiten Bereich 244 der zweiten Reinigungswalzeneinheit 218 wirkt die jeweilige rotierende Reinigungswalzeneinheit 216 bzw. 218 mechanisch auf die zu reinigende Fläche und es wird Schmutz gelöst. Die Befeuchtung über Reinigungsflüssigkeit an der Tankeinrichtung unterstützt die Schmutzlösung.

Schmutz wird durch den Besatz 222 der ersten und zweiten Reinigungswalzeneinheit 216 bzw. 218 aufgenommen und in der ersten Rotationsrichtung 236 bzw. zweiten Rotationsrichtung 238 gefördert.

Eventuell sich ansammelnder Grobschmutz an dem ersten Kehrelement 272 bzw. an dem zweiten Kehrelement 274 wird in der ersten Rotationsrichtung 236 bzw. der zweiten Rotationsrichtung 238 mitgenommen.

Je nach Ausbildung des Reinigungskopfes 212 wird Schmutzfluid beispielsweise an der ersten Einlassmündungseinrichtung 284 und der zweiten Einlassmündungseinrichtung 286 über die Gebläseeinrichtung 278 abgesaugt.

Es ist auch möglich, dass an einer entsprechenden ersten Einlassmündungseinrichtung 300 und einer zweiten Einlassmündungseinrichtung 302 gebläsefrei durch Abstreifen eine Einkopplung in die Tankeinrichtung 290 für Schmutzfluid erfolgt (vgl. Figur 6).

Bei der Flächen-Reinigungsmaschine 210 sind zwei gegenläufige Reinigungswalzeneinheiten 216, 218 vorgesehen. Dadurch lässt sich auf die zu reinigende Fläche 224 ein voller Anpressdruck unabhängig von der Schwenkposition der Haltestabeinrichtung 254 zu der zu reinigenden Fläche 224 erreichen.

Es lässt sich ferner ein gleichbleibender Abstand der Kehrelemente 272, 274 zu der zu reinigenden Fläche 224 sicherstellen.

Weiter kann an einer Reinigungswalzeneinheit 216 bzw. 218 durchgeschleuderter Schmutz von der anderen Reinigungswalzeneinheit 218 bzw. 216 erfasst werden.

Die Tankeinrichtung 290 für Schmutzfluid ist zwischen der ersten Reinigungswalzeneinheit 216 und der zweiten Reinigungswalzeneinheit 218 positioniert. Es ergibt sich dadurch zumindest für die direkte Einkopplung ein kurzer Transportweg für Schmutzfluid. Ferner lässt sich der Schwerpunkt niedrig halten und es ergibt sich ein geringer Reinigungsaufwand für die Tankeinrichtung.

Der Tankeinrichtung 290 für Schmutzfluid ist eine Sondeneinrichtung 310 zugeordnet (Figuren 4 bis 7, Figur 9), durch welche ein Befüllungsgrad an Schmutzfluid in der Tankeinrichtung 290 ermittelbar ist.

Die Sondeneinrichtung 310 ist insbesondere als Elektrodeneinrichtung bzw. Widerstandsmesseinrichtung ausgebildet. Die Sondeneinrichtung 310 umfasst dazu eine erste Elektrode 312 und eine beabstandet zu dieser angeordnete zweite Elektrode 314.

Die erste Elektrode 312 und die zweite Elektrode 314 sind so angeordnet und ausgebildet, dass sie in einen Aufnahmeraum 316 der Tankeinrichtung 290 für Schmutzfluid ragen.

Sie sind dabei beabstandet zu einem Tankboden 318 der Tankeinrichtung 290 für Schmutzfluid positioniert. Sie sind so angeordnet, dass bei steigendem Flüssigkeitspegel 320 (vergleiche Figur 6) in dem Aufnahmeraum 316 dieser Flüssigkeitspegel 320 in Richtung der Elektroden 312, 314 ansteigt.

Zwischen der ersten Elektrode 312 und der zweiten Elektrode 314 wird eine Gleichspannung angelegt. Diese kann auch gepulst sein.

Wenn der Flüssigkeitspegel 320 unterhalb der Elektroden 312, 314 liegt (vergleiche Figur 9), dann liegt eine Luftbrücke zwischen den Elektroden 312, 314 und es kann kein Strom fließen. Idealisiert kann dies so angesehen werden, dass der elektrische Widerstand zwischen der ersten Elektrode 312 und der zweiten Elektrode 314 unendlich ist.

Wenn der Flüssigkeitspegel 320 die Elektroden 312, 314 erreicht, dann kann über die Flüssigkeit ein Strom zwischen der ersten Elektrode 312 und der zweiten Elektrode 314 fließen. Dadurch ergibt sich dann ein endlicher Widerstand. Der Übergang von dem idealisiert unendlichen Widerstand zu dem endlichen Widerstand ist messbar. Es lässt sich dadurch ermitteln, ob der Flüssigkeitspegel 320 einen bestimmten Befüllungsgrad 322 erreicht. Der bestimmte Befüllungsgrad ist durch die Anordnung der ersten Elektrode 312 und der zweiten Elektrode 314 vorgegeben.

Insbesondere ist die Sondeneinrichtung 310 mit einer Auswerteeinrichtung verbunden. Bei einer Ausführungsform entspricht diese Auswerteeinrichtung der Auswerteeinrichtung 134 für die Sensoreinrichtung 126. Es kann auch eine getrennte Auswerteeinrichtung für die Sondeneinrichtung 310 vorgesehen sein.

Beispielsweise wird über einen Anschluss 324 eines ASICs, welcher insbesondere der ASIC 138 ist, eine Spannung zwischen der ersten Elektrode 312 und der zweiten Elektrode 314 angelegt. Die entsprechende Spannung bildet ein Beaufschlagungssignal. Eine abfallende Spannung, welche insbesondere an einem Anschluss 326 ansteht, ist das entsprechende Reaktionssignal.

Zwischen der ersten Elektrode 312 und der zweiten Elektrode 314 liegt ein Widerstand. Wenn sich keine Flüssigkeit zwischen den Elektroden befindet, dann kann idealisiert dieser Widerstand als unendlich groß angesehen werden. Wenn der Flüssigkeitspegel 320 die Elektroden 312, 314 erreicht, dann kann ein Strom fließen. Dadurch wird der Widerstand endlich und die Spannung, welche am Anschluss 326 ansteht, ändert sich. Diese Änderung ist durch das Erreichen des bestimmten Befüllungsgrads 322 durch den Flüssigkeitspegel 320 verursacht. Es lässt sich dadurch entsprechend dieser Schwellenwert 322 detektieren und der Flüssigkeitspegel 320 lässt sich zumindest "digital" bestimmen.

Es ist eine Anzeigeeinrichtung 328 vorgesehen, durch welche einem Bediener optisch und/oder akustisch anzeigbar ist, dass der bestimmte Befüllungsgrad 322 der Tankeinrichtung 290 für Schmutzfluid erreicht ist. Die Anzeigeeinrichtung 328 umfasst ein optisches und/oder akustisches Element 330, welches insbesondere an dem Griff 60 angeordnet ist. Beispielsweise blinkt das optische Element 330, wenn der bestimmte Befüllungsgrad 322 erreicht ist.

Alternativ oder zusätzlich ist die Auswerteeinrichtung 134 signalwirksam mit einem Sender entsprechend dem Sender 144 verbunden, um eine Fernbedienung oder ein mobiles Gerät 146 mit entsprechenden Warnsignalen bzw. Anzeigesignalen versorgen zu können.

Die Auswerteeinrichtung 134 ermöglicht dabei insbesondere Folgendes:
Die Auswerteeinrichtung 134 versorgt die Sondeneinrichtung 310 mit einer Gleichspannung, welche auch gepulst sein kann. Als Reaktionssignal, welches insbesondere an dem Anschluss 326 ansteht, ergibt sich eine Spannung. Es lässt sich zumindest indirekt eine Widerstandsmessung durchführen. Dadurch lässt sich prüfen, ob der bestimmte Befüllungsgrad 322 erreicht ist.

Grundsätzlich kann bei dem Betrieb der Flächen-Reinigungsmaschine 210 ein Schwappen von Flüssigkeit in dem Aufnahmeraum 316 der Tankeinrichtung 290 vorliegen. Es ist vorgesehen, dass die Auswerteeinrichtung 134 eine Filtereinrichtung aufweist, welche kurzzeitige Widerstandsänderungen erfassen kann. Bezüglich der Bestimmung des Befüllungsgrads 322 werden nur länger dauernde Zustände benutzt. Es lässt sich so sicher bestimmen, ob der bestimmte Befüllungsgrad 322 erreicht ist; es lassen sich dadurch gewissermaßen Schwappvorgänge, welche kurzzeitig sind, ausfiltern.

Wenn erkannt wird, dass der bestimmte Befüllungsgrad 322 (langfristig) erreicht ist, dann sorgt die Auswerteeinrichtung 134 für eine entsprechende Signalbeaufschlagung der Anzeigeeinrichtung 328 bzw. des Senders 144. Es werden insbesondere entsprechende Warnsignale initiiert bzw. abgegeben.

Es kann auch vorgesehen sein, dass, wenn erkannt wird, dass der bestimmte Befüllungsgrad 322 erreicht ist, ein rotativer Antrieb der Reinigungswalzeneinheiten 16, 18 abgeschaltet wird und/oder der Betrieb einer Gebläseeinrichtung abgeschaltet wird, um eine weitere Einkopplung von Schmutzfluid in die Tankeinrichtung 290 zu verhindern.

Es kann auch vorgesehen sein, dann, wenn beispielsweise vor Betriebsaufnahme der Flächen-Reinigungsmaschine 210 erkannt wird, dass der bestimmte Befüllungsgrad 322 erreicht ist, ein rotativer Antrieb der Reinigungswalzeneinheiten 216, 218 gesperrt wird bzw. der Betrieb einer Gebläseeinrichtung gesperrt wird.

Grundsätzlich ist es möglich, dass die Sondeneinrichtung 310 auch beispielsweise bei der Flächen-Reinigungsmaschine 10 verwendet wird, bei der der entsprechenden Tankeinrichtung 34 für Reinigungsflüssigkeit die Sensoreinrichtung 126 zugeordnet ist.

Ferner ist es möglich, dass für die Tankeinrichtung 66 für Schmutzfluid der Flächen-Reinigungsmaschine 10 eine Sondeneinrichtung entsprechend der Sondeneinrichtung 310 verwendet wird.

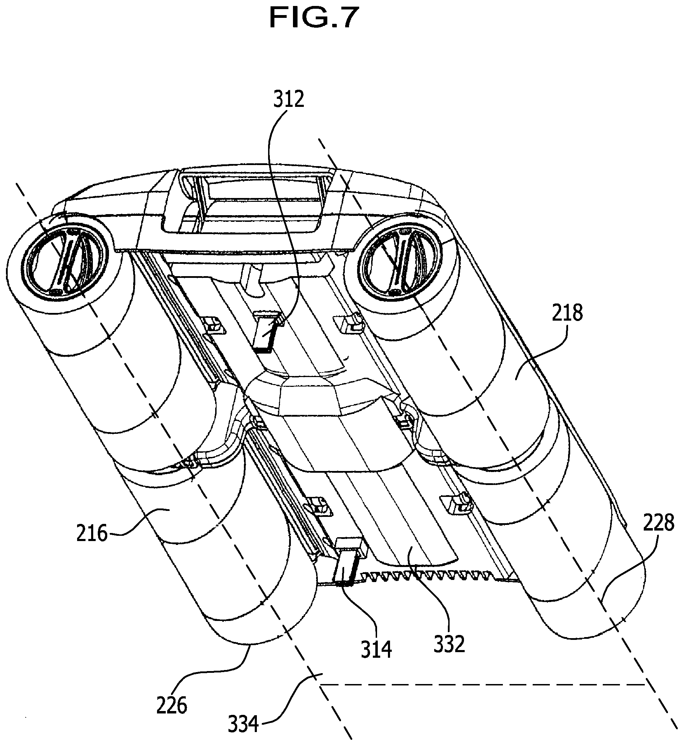

Bei der Flächen-Reinigungsmaschine 210 ist die Tankeinrichtung 290 für Schmutzfluid zwischen der ersten Reinigungswalzeneinheit 216 und der zweiten Reinigungswalzeneinheit 218 positioniert. Es ist eine Deckelwandung 332 vorgesehen (vergleiche Figur 7), welche die Tankeinrichtung 290 nach oben abdeckt (in Figur 7 ist diese Tankeinrichtung 290 entfernt).

Die erste Elektrode 312 und die zweite Elektrode 314 sitzen an der Deckelwandung 332. Sie sind quer zu einer Ebene 334 orientiert (Figur 7), wobei diese Ebene 334 die erste Rotationsachse 226 und die zweite Rotationsachse 228 enthält.

Bei einer Ausführungsform bildet die Deckelwandung 332 einen Deckel für die Tankeinrichtung 290 für Schmutzfluid.

Grundsätzlich ist es möglich, dass die Sondeneinrichtung 310 eine Mehrzahl von Elektrodenpaaren umfasst. Es können so auch unterschiedliche Zwischenstufen bis zu Erreichen des bestimmten Befüllungsgrads 322 detektiert werden.

Wie oben erwähnt, lässt sich die Sondeneinrichtung 310 beispielsweise auch bei der Tankeinrichtung 66 der Flächen-Reinigungsmaschine 10 einsetzen.

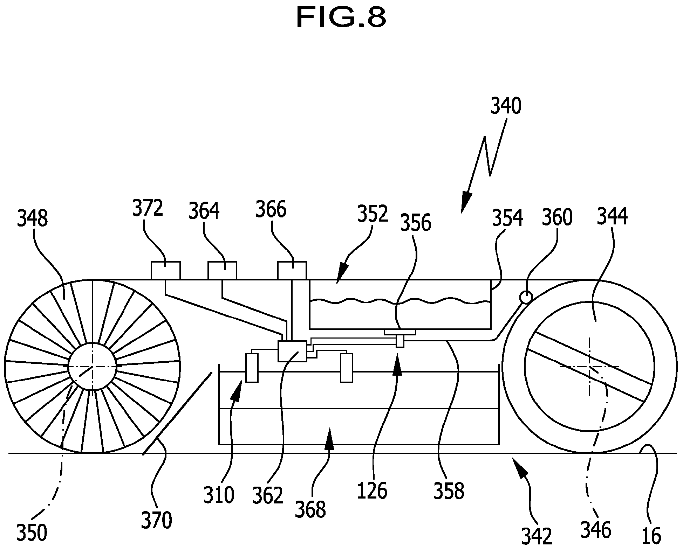

Ein drittes Ausführungsbeispiel einer erfindungsgemäßen Flächen-Reinigungsmaschine, welches in Figur 8 schematisch gezeigt und mit 340 bezeichnet ist, ist ein selbstfahrendes und selbstlenkendes Gerät ("Reinigungsroboter").

Die Flächen-Reinigungsmaschine 340 umfasst einen Reinigungskopf 342. An diesem ist eine erste Reinigungswalzeneinheit 344 angeordnet. Diese ist um eine erste Rotationsachse 346 rotierbar. Dazu ist an dem Reinigungskopf 342 ein entsprechender Rotationsantrieb angeordnet (in Figur 8 nicht gezeigt).

Beabstandet zu der ersten Reinigungswalzeneinheit 344 ist an dem Reinigungskopf 342 eine zweite Walzeneinheit 348 angeordnet. Die zweite Walzeneinheit ist um eine zweite Rotationsachse 350 rotierbar. Insbesondere ist sie über einen entsprechenden Rotationsantrieb rotatorisch angetrieben.

Der Reinigungskopf 342 und damit die Flächen-Reinigungsmaschine 340 ist über die erste Reinigungswalzeneinheit 344 und die zweite Reinigungswalzeneinheit 348 auf der zu reinigenden Fläche 16 abgestützt.

Die zweite Walzeneinheit 348 ist beispielsweise als Kehrwalzeneinheit ausgebildet.

Es ist eine Befeuchtungseinrichtung 352 vorgesehen, über welche (mindestens) der ersten Reinigungswalzeneinheit 344 Reinigungsflüssigkeit (Frischwasser mit oder ohne einem Reinigungsmittel) zuführbar ist.

Die Befeuchtungseinrichtung 352 umfasst eine Tankeinrichtung 354 für Reinigungsflüssigkeit. Die Tankeinrichtung 354 ist an dem Reinigungskopf 342 angeordnet.

Der Tankeinrichtung 354 ist ein Durchflussbereich 356 zugeordnet. An dem Durchflussbereich 356 sitzt eine Sensoreinrichtung entsprechend der Sensoreinrichtung 126. Es werden für gleiche Elemente gleiche Bezugszeichen verwendet.

Von dem Durchflussbereich 356 führen eine oder mehrere Leitungen 358 zu einer Düseneinrichtung 360, mittels welcher die erste Reinigungswalzeneinheit 344 mit Reinigungsflüssigkeit beaufschlagbar ist.

Die Sensoreinrichtung 126 steht in signalwirksamer Verbindung mit einer Auswerteeinrichtung 362, welche der Auswerteeinrichtung 134 entspricht.

Über die Sensoreinrichtung 126 lässt sich bestimmen, ob die Tankeinrichtung 354 leer ist. Dies wird an einer Anzeigeeinrichtung 364 angezeigt, welche an dem Reinigungskopf 342 sitzt.

Es ist auch möglich, dass über die Auswerteeinrichtung 362 ein Sender 366 angesteuert ist, um beispielsweise einem mobilen Gerät wie einem Smartphone den Befüllungsgrad der Tankeinrichtung 354 für Reinigungsflüssigkeit anzuzeigen bzw. um eine Warnanzeige abzugeben.

An dem Reinigungskopf 342 sitzt ferner abnehmbar eine Tankeinrichtung 368 für Schmutzfluid. Schmutzfluid, welches von der ersten Reinigungswalzeneinheit 344 abgelöst bzw. abgesaugt wird, wird in die Tankeinrichtung 368 eingekoppelt.

Grundsätzlich ist es auch möglich, dass beispielsweise Kehrgut über eine Rampe 370 in die Tankeinrichtung 368 befördert wird.

Der Tankeinrichtung 368 ist eine Sondeneinrichtung entsprechend der Sondeneinrichtung 310 zugeordnet. Es ragen dabei mindestens zwei Elektroden in einen Aufnahmeraum der Tankeinrichtung 368. Die entsprechende Sondeneinrichtung 310 ist mit der Auswerteeinrichtung 362 in fluidwirksamer Verbindung.

Es lässt sich dadurch der Befüllungsgrad der Tankeinrichtung 368 ermitteln, und es lässt sich insbesondere ermitteln, ob ein bestimmter Befüllungsgrad erreicht ist.

Die Auswerteinrichtung 362 ist signalwirksam mit einer Anzeigeeinrichtung 372 verbunden, wobei diese Anzeigeeinrichtung 372 der Sondeneinrichtung 310 zugeordnet ist. Die Anzeigeeinrichtung 372 ist an dem Reinigungskopf 342 angeordnet. Durch sie wird angezeigt (optisch und/oder akustisch), ob der bestimmte Befüllungsgrad für die Tankeinrichtung 368 erreicht ist.

Auch über den Sender 366 lässt sich ein entsprechendes Zustandssignal oder Warnsignal beispielsweise für ein Smartphone oder dergleichen initiieren.

Die Flächen-Reinigungsmaschine 340 wird beispielsweise abgestellt bzw. fährt zu einer Station (insbesondere Ladestation), wenn detektiert wird, dass die Tankeinrichtung 354 entleert ist, und/oder die Tankeinrichtung 368 ihren bestimmten Befüllungsgrad erreicht hat.

Ansonsten funktioniert die Sondeneinrichtung 310 bzw. die Sensoreinrichtung 126 in Zusammenhang mit der Auswerteeinrichtung 362 wie oben anhand der Auswerteeinrichtung 134 beschrieben.

### Bezugszeichenliste

- 10: Flächen-Reinigungsmaschine (Erstes Ausführungsbeispiel)
- 12: Gerätekörper
- 14: Reinigungskopf
- 16: Zu reinigende Fläche
- 18: Reinigungswalzeneinheit
- 20: Längsachse
- 22: Haltestabeinrichtung
- 24: Haltestab
- 26: (Hand-)Griff
- 28: Antriebsmotor
- 30: Gehäuse
- 32: Halter
- 34: Tankeinrichtung für Reinigungsflüssigkeit
- 38: Ventileinrichtung
- 39: Filtereinrichtung
- 40: Fluidleitung
- 42: Besatz
- 44: Batterieeinrichtung
- 46: Motorachse
- 48: Schwenkachse
- 50: Doppelpfeil
- 52: Innenhülse
- 54: Außenhülse
- 56: Schwenklager
- 58: Rotationsachse
- 60: Reinigungswalzenhalter
- 62: Haltebereich
- 64: Aufnahmekammer
- 66: Tankeinrichtung für Schmutzfluid
- 70: Welle
- 72: Erster Teil
- 74: Zweiter Teil
- 76: Zwischenbereich
- 78: Hülse
- 80: Erste Stirnseite
- 82: Zweite Stirnseite
- 88: Aufnahmeraum
- 100: Halteposition
- 102: Klappe
- 106: Schwenklager
- 108: Richtung
- 110: Abstreif-Leiteinrichtung
- 112: Eingangsmündung
- 114: Querbereich
- 116: Halteeinrichtung
- 118: Ausgang
- 120: Anschluss
- 122: Durchflussbereich
- 124: Strömungsrichtung
- 126: Sensoreinrichtung
- 128: Erste Elektrode
- 130: Zweite Elektrode
- 132: Wandung
- 134: Auswerteeinrichtung
- 136a: Leitung
- 136b: Leitung
- 138: ASIC
- 140: Anzeigeeinrichtung
- 142: Optische Anzeige
- 144: Sender
- 146: Fernbedienung, mobiles Gerät
- 210: Flächen-Reinigungsmaschine
- 212: Reinigungskopf
- 214: Kopfkörper
- 216: Erste Reinigungswalzeneinheit
- 218: Zweite Reinigungswalzeneinheit
- 220: Träger
- 222: Besatz
- 224: Zu reinigende Fläche
- 226: Erste Rotationsachse
- 228: Zweite Rotationsachse
- 230: Antriebseinrichtung
- 232: Erster Antrieb
- 234: Zweiter Antrieb
- 236: Erste Rotationsrichtung
- 238: Zweite Rotationsrichtung
- 240: Erster Bereich
- 242: Bereich
- 244: Zweiter Bereich
- 246: Einstelleinrichtung
- 248: Erste Vorschubrichtung
- 250: Zweite Vorschubrichtung
- 252: Gelenk
- 254: Haltestabeinrichtung
- 256: Schwenkachse
- 258: Proximales Ende
- 260: Bügelgriff
- 262: Distales Ende
- 264: Batterieeinrichtung
- 266: Tankeinrichtung für Reinigungsflüssigkeit
- 268: Erste Auslassmündungseinrichtung
- 270: Zweite Auslassmündungseinrichtung
- 272: Erstes Kehrelement
- 274: Zweites Kehrelement
- 276: Längsrichtung
- 278: Gebläseeinrichtung
- 280: Kanal
- 282: Kanal
- 284: Erste Einlassmündungseinrichtung
- 286: Zweite Einlassmündungseinrichtung
- 288: Tankeinrichtung für Schmutzfluid
- 290: Tankeinrichtung für Schmutzfluid
- 296: Erste Einlassmündungseinrichtung
- 298: Zweite Einlassmündungseinrichtung
- 300: Erste Einlassmündungseinrichtung
- 302: Zweite Einlassmündungseinrichtung
- 304: Abstreifer
- 306: Abstreifer
- 310: Sondeneinrichtung
- 312: Erste Elektrode
- 314: Zweite Elektrode
- 316: Aufnahmeraum
- 318: Tankboden
- 320: Flüssigkeitspegel
- 322: Bestimmter Befüllungsgrad
- 324: Anschluss
- 326: Anschluss
- 328: Anzeigeeinrichtung
- 330: Optisches und/oder akustisches Element
- 332: Deckelwandung
- 334: Ebene
- 340: Flächen-Reinigungsmaschine
- 342: Reinigungskopf
- 344: Erste Reinigungswalzeneinheit
- 346: Erste Rotationsachse
- 348: Zweite Walzeneinheit
- 350: Zweite Rotationsachse
- 352: Befeuchtungseinrichtung
- 354: Tankeinrichtung für Reinigungsflüssigkeit
- 356: Durchflussbereich
- 358: Leitung
- 360: Düseneinrichtung
- 362: Auswerteeinrichtung
- 364: Anzeigeeinrichtung
- 366: Sender
- 368: Tankeinrichtung für Schmutzfluid
- 370: Rampe
- 372: Anzeigeeinrichtung

## Patentansprüche

1. Flächen-Reinigungsmaschine, umfassend einen Reinigungskopf (212; 342) mit mindestens einer Reinigungswalzeneinheit (216, 218; 344), welche für eine Rotationsbewegung angetrieben ist, eine Tankeinrichtung (288; 368) für Schmutzfluid, und eine Sondeneinrichtung (310) zur Ermittlung eines Befüllungsgrads (322) der Tankeinrichtung (288; 368) für Schmutzfluid, wobei die Sondeneinrichtung (310) als Elektrodeneinrichtung ausgebildet ist, und eine erste Elektrode (312) und eine zu der ersten Elektrode beabstandete zweite Elektrode (314) aufweist, welche in einen Aufnahmeraum (316) der Tankeinrichtung (288; 368) für Schmutzfluid ragen, **dadurch gekennzeichnet, dass** die erste Elektrode (312) und die zweite Elektrode (314) fest mit einem Halter (212; 342) für die Tankeinrichtung (288; 368) für Schmutzfluid verbunden sind, wobei die Tankeinrichtung (288; 368) für Schmutzfluid von dem Halter (212; 342) lösbar ist.

2. Flächen-Reinigungsmaschine nach Anspruch 1, **dadurch gekennzeichnet, dass** die Sondeneinrichtung (310) als Widerstandsmesseinrichtung ausgebildet ist.

3. Flächen-Reinigungsmaschine nach Anspruch 1 oder 2, **gekennzeichnet durch** mindestens eines der Folgenden:
- die Elektrodeneinrichtung ist so angeordnet und ausgebildet, dass ein bestimmter Befüllungsgrad (322) der Tankeinrichtung (288; 368) für Schmutzfluid detektierbar ist;
- es ist eine Gleichstrombeaufschlagung oder Gleichspannungsbeaufschlagung der Elektrodeneinrichtung vorgesehen.

4. Flächen-Reinigungsmaschine nach einem der vorangehenden Ansprüche, **dadurch gekennzeichnet, dass** die Sondeneinrichtung (310) signalwirksam mit einer Auswerteeinrichtung (134) verbunden ist, insbesondere mit mindestens einem der Folgenden:
- die Auswerteeinrichtung (134) steuert eine Anzeigeeinrichtung (328) und/oder einen Sender (144) an;
- die Auswerteeinrichtung (134) initiiert für die Anzeigeeinrichtung (328) und/oder den Sender (144) ein Warnsignal, wenn das Erreichen eines bestimmten Befüllungsgrads (322) detektiert ist;
- die Auswerteeinrichtung (134) prüft über eine Widerstandsermittlung einen Befüllungsgrad der Tankeinrichtung (66; 288) für Schmutzfluid;
- die Auswerteeinrichtung (134) steuert die Sondeneinrichtung (310) insbesondere mit einem Gleichstromsignal oder Gleichspannungssignal an;
- die Auswerteeinrichtung (134) umfasst eine Filtereinrichtung, welche zeitliche Veränderungen in Signalen der Sondeneinrichtung (310) prüft, wobei insbesondere die Filtereinrichtung so ausgebildet ist, dass ein zeitlich begrenztes Schwappen von Schmutzfluid in der Tankeinrichtung (66; 288) für Schmutzfluid erkennbar ist;
- die Auswerteeinrichtung (134) schaltet einen Antrieb für die mindestens eine Reinigungswalzeneinheit (216, 218) und/oder eine Förderung oder Förderbarkeit von Reinigungsflüssigkeit ab, wenn ein bestimmter Befüllungsgrad (322) an der Tankeinrichtung (66; 288) für Schmutzfluid detektiert ist;
- die Auswerteeinrichtung (134) verhindert bei einer Inbetriebnahme der Flächen-Reinigungsmaschine einen Rotationsantrieb der mindestens einen Reinigungswalzeneinheit und/oder einen Saugbetrieb, wenn der bestimmte Befüllungsgrad (322) detektiert ist;
- die Anzeigeeinrichtung (328) ist an einem Handgriff (260) angeordnet, über welchen der Reinigungskopf (212) durch einen Bediener führbar ist, und/oder die Anzeigeeinrichtung (328) ist an dem Reinigungskopf (342) angeordnet.

5. Flächen-Reinigungsmaschine nach einem der vorangehenden Ansprüche, **gekennzeichnet durch** eine erste Reinigungswalzeneinheit (216; 344) und eine zu der ersten Reinigungswalzeneinheit (216; 344) beabstandete zweite Walzeneinheit (218; 348), wobei die Tankeinrichtung (288; 368) für Schmutzfluid zwischen der ersten Reinigungswalzeneinheit (216; 344) und der zweiten Walzeneinheit (218; 348) positioniert ist, insbesondere mit mindestens einem der Folgenden:
- die zweite Walzeneinheit ist eine zweite Reinigungswalzeneinheit (218) oder eine Kehrwalzeneinheit (348), und insbesondere ist eine gegenläufige Rotation der ersten Reinigungswalzeneinheit (216; 344) und der zweiten Walzeneinheit (218; 348) vorgesehen;
- es ist eine Deckelwandung (332) vorgesehen, welche mit dem Reinigungskopf (212) verbunden ist und welche die Tankeinrichtung (288) für Schmutzfluid abdeckt, wobei insbesondere Elektroden der Sondeneinrichtung (310) an der Deckelwandung (332) angeordnet sind und insbesondere fest mit dem Reinigungskopf (212) verbunden sind, und/oder dass Elektroden (312, 314) der Sondeneinrichtung (310) in einer Richtung quer zu einer Ebene (334) von der Deckelwandung (332) in einen Aufnahmeraum (316) der Tankeinrichtung (288) für Schmutzfluid ragen, wobei eine erste Rotationsachse (226) der ersten Rotationswalzeneinheit (216) und eine zweite Walzenachse (228) der zweiten Walzeneinheit (218) in dieser Ebene (334) liegen.

6. Flächen-Reinigungsmaschine nach einem der Ansprüche 1 bis 4, **dadurch gekennzeichnet, dass** die Tankeinrichtung (288) für Schmutzfluid lösbar an einer Haltestabeinrichtung (22) angeordnet ist, an welcher der Reinigungskopf (14) sitzt.

7. Flächen-Reinigungsmaschine nach einem der vorangehenden Ansprüche, **gekennzeichnet durch** eine Ausbildung als selbstfahrendes und selbstlenkendes Gerät.

8. Flächen-Reinigungsmaschine nach einem der Ansprüche 1 bis 5, **gekennzeichnet durch** eine Ausbildung als handgeführtes Gerät, welches insbesondere eine Haltestabeinrichtung (254) aufweist, an welcher der Reinigungskopf (212) sitzt.

9. Flächen-Reinigungsmaschine nach einem der vorangehenden Ansprüche, **gekennzeichnet durch** eine Befeuchtungseinrichtung, mittels welcher die mindestens eine Reinigungswalzeneinheit (216, 218; 344) und/oder eine zu reinigende Fläche (16; 224) mit Reinigungsflüssigkeit beaufschlagbar ist, wobei die Befeuchtungseinrichtung eine Tankeinrichtung (34; 266; 354) für Reinigungsflüssigkeit aufweist, und insbesondere
**gekennzeichnet durch** einen Durchflussbereich (122; 356) für Reinigungsflüssigkeit, durch welchen Reinigungsflüssigkeit, welche von der Tankeinrichtung (34; 266; 354) für Reinigungsflüssigkeit bereitgestellt ist, bei Zuführung zu der mindestens einen Reinigungswalzeneinheit (18; 216, 218; 344) und/oder zu einer zu reinigenden Fläche (16; 224) strömt, und wobei an dem Durchflussbereich (122; 356) eine Sensoreinrichtung (126) angeordnet ist, welche die Anwesenheit von Reinigungsflüssigkeit in dem Durchflussbereich (122; 356) ermittelt.

10. Flächen-Reinigungsmaschine nach Anspruch 9, **gekennzeichnet durch** mindestens eines der Folgenden:
- der Durchflussbereich (122; 356) ist an einem Rohrbereich oder einem Schlauchbereich gebildet;
- der Durchflussbereich (122; 356) ist bei einem ordnungsgemäßen Betrieb der Flächen-Reinigungsmaschine bezogen auf die Schwerkraftrichtung (g) unterhalb der Tankeinrichtung (34; 266; 354) für Reinigungsflüssigkeit angeordnet;
- bezogen auf eine Strömungsrichtung von Reinigungsflüssigkeit ist der Durchflussbereich (122) einem Anschluss (120) für die Tankeinrichtung (34) für Reinigungsflüssigkeit nachgeordnet;
- es ist ein Halter (32) vorgesehen, an dem die Tankeinrichtung (34) für Reinigungsflüssigkeit insbesondere lösbar gehalten ist, wobei insbesondere an dem Halter (32) ein Anschluss (120) für die Tankeinrichtung (34) für Reinigungsflüssigkeit angeordnet ist und/oder der Durchflussbereich an dem Halter (32) angeordnet ist;
- eine Durchströmbarkeit eines Durchflussbereichs (122) ist mit einem Rotationsantrieb der mindestens einen Reinigungswalzeneinheit (18) gekoppelt ist und/oder der Durchflussbereich (122) ist einer Ventileinrichtung (38) für die Förderung von Reinigungsflüssigkeit zu der mindestens einen Reinigungswalzeneinheit (18) und/oder der zu reinigenden Fläche (14) vorgeschaltet;
- die Sensoreinrichtung (126) ist als Widerstandsmesseinrichtung ausgebildet.

11. Flächen-Reinigungsmaschine nach einem der Ansprüche 9 oder 10, **dadurch gekennzeichnet, dass** die Sensoreinrichtung (126) als Elektrodeneinrichtung ausgebildet ist, und insbesondere ist eine Beaufschlagung der Elektrodeneinrichtung mit einem Gleichstrom oder einer Gleichspannung vorgesehen.

12. Flächen-Reinigungsmaschine nach Anspruch 11, **dadurch gekennzeichnet, dass** die Sensoreinrichtung (126) eine erste Elektrode (128) und eine zu der ersten Elektrode (128) beabstandete zweite Elektrode (130) umfasst, wobei die erste Elektrode (128) und die zweite Elektrode (130) in den Durchflussbereich (122) ragen, insbesondere mit mindestens einem der Folgenden:
- die erste Elektrode (128) und die zweite Elektrode (130) sitzen in einer Wandung (132) des Durchflussbereichs (122) und sind insbesondere eingespritzt;
- die erste Elektrode (128) und/oder die zweite Elektrode (130) sind als Metallstifte ausgebildet.

13. Flächen-Reinigungsmaschine nach einem der Ansprüche 9 bis 12, **dadurch gekennzeichnet, dass** über die Sensoreinrichtung (126) ermittelbar ist, ob die Tankeinrichtung (34; 266; 354) für Reinigungsflüssigkeit leer ist, wobei über die Abwesenheit von Reinigungsflüssigkeit in dem Durchflussbereich (122; 356) auf eine Entleerung der Tankeinrichtung (34; 266; 354) für Reinigungsflüssigkeit geschlossen wird.

14. Flächen-Reinigungsmaschine nach einem der Ansprüche 9 bis 13, **dadurch gekennzeichnet, dass** die Sensoreinrichtung (126) signalwirksam mit einer Auswerteeinrichtung (134) verbunden ist, insbesondere mit mindestens einem der Folgenden:
- die Auswerteeinrichtung (134) ermittelt aus Sensordaten der Sensoreinrichtung (126) einen Befüllungsgrad der Tankeinrichtung (34; 266; 354) für Reinigungsflüssigkeit;
- die Auswerteeinrichtung (134) steuert die Sensoreinrichtung (126) an;
- die Auswerteeinrichtung (134) ist signalwirksam mit einer Anzeigeeinrichtung (140) und/oder einem Sender (144) verbunden;
- die Auswerteeinrichtung (134) initiiert ein Warnsignal, wenn die Tankeinrichtung (34; 266; 354) für Reinigungsflüssigkeit als leer detektiert wird;
- die Auswerteeinrichtung (134) schaltet einen Rotationsantrieb für die mindestens eine Reinigungswalzeneinheit (18) ab, wenn die Tankeinrichtung (34; 266; 354) für Reinigungsflüssigkeit als leer detektiert wird.

15. Flächen-Reinigungsmaschine nach Anspruch 14, **dadurch gekennzeichnet, dass** die Anzeigeeinrichtung (140) an einem Haltegriff (26) angeordnet ist, über welchen der Reinigungskopf (14) durch einen Bediener führbar ist, und/oder an dem Reinigungskopf (342) angeordnet ist.

## Claims

1. Surface cleaning machine, comprising a cleaning head (212; 342) having at least one cleaning roller unit (216, 218; 344) which is driven for rotary movement, a tank device (288; 368) for dirty fluid and a probe device (310) for determining a degree of fill (322) of the tank device (288; 368) for dirty fluid, wherein the probe device (310) is configured as an electrode device and comprises a first electrode (312) and a second electrode (314) in spaced relation to the first electrode, which electrodes project into a receiving space (316) of the tank device (288; 368) for dirty fluid, **characterized in that** the first electrode (312) and the second electrode (314) are fixedly connected to a holder (212; 342) for the tank device (288; 368) for dirty fluid, wherein the tank device (288; 368) for dirty fluid is releasable from the holder (212; 342).

2. Surface cleaning machine in accordance with claim 1, **characterized in that** the probe device (310) is configured as a resistance measuring device.

3. Surface cleaning machine in accordance with claim 1 or 2, **characterized by** at least one of the following:
- the electrode device is arranged and configured such that a particular degree of fill (322) of the tank device (288; 368) for dirty fluid is detectable;
- provision is made for the electrode device to have a direct current or a direct voltage applied thereto.

4. Surface cleaning machine in accordance with any one of the preceding claims, **characterized in that** the probe device (310) is operatively connected to an evaluation device (134) for signal communication therewith, in particular with at least one of the following:
- the evaluation device (134) controls an indication device (328) and/or a transmitter (144);
- the evaluation device (134) initiates a warning signal for the indication device (328) and/or the transmitter (144) when the reaching of a particular degree of fill (322) is detected;
- the evaluation device (134) checks a degree of fill of the tank device (66; 288) for dirty fluid via a resistance determination:
- the evaluation device (134) controls the probe device (310) using, in particular, a direct current signal or a direct voltage signal;
- the evaluation device (134) comprises a filter device which checks for variations with time in signals of the probe device (310), in particular wherein the filter device is configured such that temporary sloshing of dirty fluid in the tank device (66; 288) for dirty fluid is recognizable;
- the evaluation device (134) turns off a drive to the at least one cleaning roller unit (216, 218) and/or a transfer or transferability of cleaning liquid when a particular degree of fill (322) is detected at the tank device (66; 288) for dirty fluid;
- the evaluation device (134) prevents rotary drive to the at least one cleaning roller unit and/or suction operation if, when starting operation of the surface cleaning machine, the particular degree of fill (322) is detected;
- the indication device (328) is arranged at a hand grip (260) via which the cleaning head (212) is guidable by a user, and/or the indication device (328) is arranged at the cleaning head (342).

5. Surface cleaning machine in accordance with any one of the preceding claims, **characterized by** a first cleaning roller unit (216; 344) and a second roller unit (218; 348) in spaced relation to the first cleaning roller unit (216; 344), wherein the tank device (288; 368) for dirty fluid is positioned between the first cleaning roller unit (216; 344) and the second roller unit (218; 348), in particular with at least one of the following:
- the second roller unit is a second cleaning roller unit (218) or is a sweeping roller unit (348), and, in particular, provision is made for the first cleaning roller unit (216; 344) and the second roller unit (218; 348) to be driven in counterrotation;
- a cover wall (332) is provided which is connected to the cleaning head (212) and which covers the tank device (288) for dirty fluid, in particular wherein electrodes of the probe device (310) are arranged at the cover wall (332) and in particular are fixedly connected to the cleaning head (212), and/or that electrodes (312, 314) of the probe device (310) project, in a direction transverse to a plane (334), from the cover wall (332) into a receiving space (316) of the tank device (288) for dirty fluid, wherein a first axis of rotation (226) of the first rotary roller unit (216) and a second roller axis (228) of the second roller unit (218) lie in said plane (334).

6. Surface cleaning machine in accordance with any one of claims 1 to 4, **characterized in that** the tank device (288) for dirty fluid is releasably arranged at a holding rod device (22) at which the cleaning head (14) is located.

7. Surface cleaning machine in accordance with any one of the preceding claims, **characterized in that** the surface cleaning machine is configured as a self-propelled and self-steering apparatus.

8. Surface cleaning machine in accordance with any one of claims 1 to 5, **characterized in that** the surface cleaning machine is configured as a hand-guided apparatus which comprises, in particular, a holding rod device (254) at which the cleaning head (212) is located.

9. Surface cleaning machine in accordance with any one of the preceding claims, **characterized by** a wetting device by which the at least one cleaning roller unit (216, 218; 344) and/or a surface (16; 224) to be cleaned are capable of having cleaning liquid applied thereto, wherein the wetting device comprises a tank device (34; 266; 354) for cleaning liquid, and in particular
**characterized by** a flow-through region (122; 356) for cleaning liquid through which cleaning liquid which is provided by the tank device (34; 266; 354) for cleaning liquid flows when it is fed to at least one cleaning roller unit (18; 216, 218; 344) and/or to a surface to be cleaned (16; 224), and wherein arranged at the flow-through region (122; 356) is a sensor device (126) which determines the presence of cleaning liquid in the flow-through region (122; 356).

10. Surface cleaning machine in accordance with claim 9, **characterized by** at least one of the following:
- the flow-through region (122; 356) is formed at a tube portion or a hose portion;
- the flow-through region (122; 356), under the normally intended conditions of use of the surface cleaning machine, is arranged below the tank device (34; 266; 354) for cleaning liquid, relative to the direction of gravity (g);
- the flow-through region (122) is arranged downstream of a port (120) for the tank device (34) for cleaning liquid, relative to a flow direction of cleaning liquid;
- a holder (32) is provided to which the tank device (34) for cleaning liquid is in particular releasably held, in particular wherein a port (120) for the tank device (34) for cleaning liquid is arranged at the holder (32) and/or the flow-through region is arranged at the holder (32);
- a capability of a flow-through region (122) to have liquid flowing therethrough is coupled to a rotary drive of the at least one cleaning roller unit (18), and/or the flow-through region (122) is located upstream of a valve device (38) for transferring cleaning liquid to the at least one cleaning roller unit (18) and/or the surface (14) to be cleaned;
- the sensor device (126) is configured as a resistance measuring device.

11. Surface cleaning machine in accordance with any one of claims 9 or 10, **characterized in that** the sensor device (126) is configured as an electrode device, and in particular **in that** provision is made for the electrode device to have a direct current or a direct voltage applied thereto.

12. Surface cleaning machine in accordance with claim 11, **characterized in that** the sensor device (126) comprises a first electrode (128) and a second electrode (130) in spaced relation to the first electrode (128), wherein the first electrode (128) and the second electrode (130) project into the flow-through region (122), in particular with at least one of the following:
- the first electrode (128) and the second electrode (130) are located in a wall (132) of the flow-through region (122) and are in particular injection moulded thereinto;
- the first electrode (128) and/or the second electrode (130) are formed as metal pins.

13. Surface cleaning machine in accordance with any one of claims 9 to 12, **characterized in that** it is determinable via the sensor device (126) whether the tank device (34; 266; 354) for cleaning liquid is empty, wherein the emptying of the tank device (34; 266; 354) for cleaning liquid being inferred from the absence of cleaning liquid in the flow-through region (122; 356).

14. Surface cleaning machine in accordance with any one of claims 9 to 13, **characterized in that** the sensor device (126) is operatively connected to an evaluation device (134) for signal communication therewith, in particular with at least one of the following:
- the evaluation device (134) determines a degree of fill of the tank device (34; 266; 354) for cleaning liquid from sensor data of the sensor device (216);
- the evaluation device (134) controls the sensor device (126);
- the evaluation device (134) is operatively connected to an indication device (140) and/or a transmitter (144), for signal communication therewith;
- the evaluation device (134) initiates a warning signal when the tank device (34; 266; 354) for cleaning liquid is detected as being empty;
- the evaluation device (134) turns off a rotary drive to the at least one cleaning roller unit (18) when the tank device (34; 266; 354) for cleaning liquid is detected as being empty.

15. Surface cleaning machine in accordance with claim 14, **characterized in that** the indication device (140) is arranged at a hand grip (26) via which the cleaning head (14) is guidable by a user, and/or is arranged at the cleaning head (342).

## Revendications

1. Machine de nettoyage de surfaces, comprenant une tête de nettoyage (212 ; 342) avec au moins une unité de rouleau de nettoyage (216, 218 ; 344) qui est entraînée en rotation, un dispositif réservoir (288 ; 368) pour fluide sale, et un dispositif de sonde (310) pour déterminer un niveau de remplissage (322) du dispositif réservoir (288 ; 368) pour fluide sale, dans laquelle le dispositif de sonde (310) est conçu sous la forme d'un dispositif à électrodes, et présente une première électrode (312) et une seconde électrode (314) espacée de la première électrode, qui pénètrent dans un espace de réception (316) du dispositif réservoir (288 ; 368) pour fluide sale, **caractérisée en ce que** la première électrode (312) et la seconde électrode (314) sont reliées de manière fixe à un support (212 ; 342) pour le dispositif réservoir (288 ; 368) pour fluide sale, dans laquelle le dispositif réservoir (288 ; 368) pour fluide sale peut être détaché du support (212 ; 342).

2. Machine de nettoyage de surfaces selon la revendication 1, **caractérisée en ce que** le dispositif de sonde (310) est conçu sous la forme d'un dispositif de mesure de résistance.

3. Machine de nettoyage de surfaces selon la revendication 1 ou 2, **caractérisée par** au moins une des caractéristiques ci-dessous :
- le dispositif à électrodes est agencé et conçu de telle sorte qu'un certain niveau de remplissage (322) du dispositif réservoir (288 ; 368) pour fluide sale peut être détecté ;
- une alimentation en courant continu ou une alimentation en tension continue du dispositif à électrodes est prévue.

4. Machine de nettoyage de surfaces selon l'une quelconque des revendications précédentes, **caractérisée en ce que** le dispositif de sonde (310) est relié de manière efficace en termes de signal à un dispositif d'évaluation (134), en particulier avec au moins une des caractéristiques suivantes :
- le dispositif d'évaluation (134) commande un dispositif d'affichage (328) et/ou un émetteur (144) ;
- le dispositif d'évaluation (134) déclenche un signal d'avertissement pour le dispositif d'affichage (328) et/ou l'émetteur (144) lorsque l'atteinte d'un certain niveau de remplissage (322) est détectée ;
- le dispositif d'évaluation (134) vérifie via une détermination de résistance un niveau de remplissage du dispositif réservoir (66 ; 288) pour fluide sale ;
- le dispositif d'évaluation (134) commande le dispositif de sonde (310) en particulier avec un signal de courant continu ou un signal de tension continue ;
- le dispositif d'évaluation (134) comprend un dispositif de filtrage qui vérifie des changements temporels dans les signaux du dispositif de sonde (310), dans lequel en particulier le dispositif de filtrage est conçu de telle sorte qu'un basculement limité dans le temps du fluide sale dans le dispositif réservoir (66 ; 288) pour fluide sale peut être détecté ;
- le dispositif d'évaluation (134) coupe un entraînement pour la au moins une unité de rouleau de nettoyage (216, 218) et/ou un refoulement ou une aptitude à être refoulé du liquide de nettoyage lorsqu'un certain niveau de remplissage (322) est détecté au niveau du dispositif réservoir (66 ; 288) pour fluide sale ;
- lors de la mise en service de la machine de nettoyage de surfaces, le dispositif d'évaluation (134) empêche un entraînement en rotation de la au moins une unité de rouleau de nettoyage et/ou un fonctionnement d'aspiration lorsque le certain niveau de remplissage (322) est détecté ;
- le dispositif d'affichage (328) est agencé au niveau d'une poignée (260) au moyen de laquelle la tête de nettoyage (212) peut être guidée par un utilisateur, et/ou le dispositif d'affichage (328) est agencé au niveau de la tête de nettoyage (342).

5. Machine de nettoyage de surfaces selon l'une quelconque des revendications précédentes, **caractérisée par** une première unité de rouleau de nettoyage (216 ; 344) et une seconde unité de rouleau (218 ; 348) espacée de la première unité de rouleau de nettoyage (216 ; 344), dans laquelle le dispositif réservoir (288 ; 368) pour fluide sale est positionné entre la première unité de rouleau de nettoyage (216 ; 344) et la seconde unité de rouleau (218 ; 348), en particulier avec au moins une des caractéristiques suivantes :
- la seconde unité de rouleau est une seconde unité de rouleau de nettoyage (218) ou une unité de rouleau de balayage (348), et en particulier une rotation inverse de la première unité de rouleau de nettoyage (216 ; 344) et de la seconde unité de rouleau (218 ; 348) est prévue ;
- une paroi de recouvrement (332) est prévue, qui est reliée à la tête de nettoyage (212) et qui recouvre le dispositif réservoir (288) pour fluide sale, dans laquelle en particulier des électrodes du dispositif de sonde (310) sont agencées sur la paroi de recouvrement (332) et sont en particulier reliées de manière fixe à la tête de nettoyage (212), et/ou dans laquelle des électrodes (312, 314) du dispositif de sonde (310) font saillie dans une direction transversale à un plan (334) de la paroi de recouvrement (332) dans un espace de réception (316) du dispositif réservoir (288) pour fluide sale, dans laquelle un premier axe de rotation (226) de la première unité de rouleau rotative (216) et un seconde axe de rouleau (228) de la seconde unité de rouleau (218) se trouvent dans ce plan (334).

6. Machine de nettoyage de surfaces selon l'une quelconque des revendications 1 à 4, **caractérisée en ce que** le dispositif réservoir (288) pour fluide sale est agencé de manière amovible sur un dispositif à barre de maintien (22) sur lequel repose la tête de nettoyage (14).

7. Machine de nettoyage de surfaces selon l'une quelconque des revendications précédentes, **caractérisée par** une réalisation sous la forme d'un appareil automoteur et autodirecteur.

8. Machine de nettoyage de surfaces selon l'une quelconque des revendications 1 à 5, **caractérisée par** une réalisation sous la forme d'un appareil tenu à la main, qui présente en particulier un dispositif à barre de maintien (254), sur lequel repose la tête de nettoyage (212).

9. Machine de nettoyage de surfaces selon l'une quelconque des revendications précédentes, **caractérisée par** un dispositif d'humidification au moyen duquel la au moins une unité de rouleau de nettoyage (216, 218 ; 344) et/ou une surface à nettoyer (16 ; 224) peuvent être alimentées en liquide de nettoyage, dans laquelle le dispositif d'humidification présente un dispositif réservoir (34 ; 266 ; 354) pour liquide de nettoyage, et en particulier
**caractérisée par** une zone d'écoulement (122 ; 356) pour liquide de nettoyage, à travers laquelle le liquide de nettoyage, qui est fourni depuis le dispositif réservoir (34 ; 266 ; 354) pour liquide de nettoyage, s'écoule lors de l'alimentation vers la au moins une unité de rouleau de nettoyage (18 ; 216, 218 ; 344) et/ou une surface à nettoyer (16 ; 224), et dans laquelle un dispositif capteur (126) est agencé au niveau de la zone d'écoulement (122 ; 356), qui détermine la présence de liquide de nettoyage dans la zone d'écoulement (122 ; 356).

10. Machine de nettoyage de surfaces selon la revendication 9, **caractérisée par** au moins une des caractéristiques suivantes :
- la zone d'écoulement (122 ; 356) est formée au niveau d'une zone de tuyau ou d'une zone de tube ;
- la zone d'écoulement (122 ; 356) est située au-dessous du dispositif réservoir (34 ; 266 ; 354) pour liquide de nettoyage en cas de fonctionnement correct de la machine de nettoyage de surfaces par rapport à la direction de gravité (g) ;
- par rapport à une direction d'écoulement du liquide de nettoyage, la zone d'écoulement (122) est subordonnée à un raccord (120) pour le dispositif réservoir (34) pour liquide de nettoyage ;
- un support (32) est prévu, sur lequel le dispositif réservoir (34) pour liquide de nettoyage est supporté en particulier de manière amovible, un raccord (120) pour le dispositif réservoir (34) pour liquide de nettoyage étant en particulier agencé au niveau du support (32) et/ou la zone d'écoulement étant agencée au niveau du support (32) ;
- une perméabilité d'une zone d'écoulement (122) est couplée à un entraînement en rotation de la au moins une unité de rouleau de nettoyage (18) et/ou la zone d'écoulement (122) est connectée en amont d'un dispositif de vanne (38) pour un refoulement du liquide de nettoyage vers la au moins une unité de rouleau de nettoyage (18) et/ou la surface à nettoyer (14) ;
- le dispositif capteur (126) est conçu sous la forme d'un dispositif de mesure de résistance.

11. Machine de nettoyage de surfaces selon l'une quelconque des revendications 9 ou 10, **caractérisée en ce que** le dispositif capteur (126) est réalisé sous la forme d'un dispositif à électrodes, et en particulier il est prévu d'alimenter le dispositif à électrodes avec un courant continu ou une tension continue.

12. Machine de nettoyage de surfaces selon la revendication 11, **caractérisée en ce que** le dispositif capteur (126) comprend une première électrode (128) et une seconde électrode (130) espacée de la première électrode (128), dans laquelle la première électrode (128) et la seconde électrode (130) font saillie dans la zone d'écoulement (122), en particulier avec au moins une des caractéristiques suivantes :
- la première électrode (128) et la seconde électrode (130) sont logées dans une paroi (132) de la zone d'écoulement (122) et sont notamment injectées ;
- la première électrode (128) et/ou la seconde électrode (130) sont conçues sous la forme de broches métalliques.

13. Machine de nettoyage de surfaces selon l'une quelconque des revendications 9 à 12, **caractérisée en ce que** le dispositif capteur (126) permet de déterminer si le dispositif réservoir (34 ; 266 ; 354) pour liquide de nettoyage est vide, dans laquelle l'absence de liquide de nettoyage dans la zone d'écoulement (122 ; 356) permettant de conclure à une vidange du dispositif réservoir (34 ; 266 ; 354) pour liquide de nettoyage.

14. Machine de nettoyage de surfaces selon l'une quelconque des revendications 9 à 13, **caractérisée en ce que** le dispositif capteur (126) est relié de manière efficace en termes de signal à un dispositif d'évaluation (134), en particulier avec au moins une des caractéristiques suivantes :
- le dispositif d'évaluation (134) détermine un niveau de remplissage du dispositif réservoir (34 ; 266 ; 354) pour liquide de nettoyage à partir de données de capteur du dispositif capteur (126) ;
- le dispositif d'évaluation (134) commande le dispositif capteur (126) ;
- le dispositif d'évaluation (134) est relié de manière efficace en termes de signal à un dispositif d'affichage (140) et/ou à un émetteur (144) ;
- le dispositif d'évaluation (134) déclenche un signal d'avertissement lorsque le dispositif réservoir (34 ; 266 ; 354) pour liquide de nettoyage est détecté comme étant vide ;
- le dispositif d'évaluation (134) désactive un entraînement rotatif pour la au moins une unité de rouleau de nettoyage (18) lorsque le dispositif réservoir (34 ; 266 ; 354) pour liquide de nettoyage est détecté comme étant vide.

15. Machine de nettoyage de surfaces selon la revendication 14, **caractérisée en ce que** le dispositif d'affichage (140) est agencé au niveau d'une poignée (26), au moyen de laquelle la tête de nettoyage (14) peut être guidée par un utilisateur, et/ou est agencé au niveau de la tête de nettoyage (342).
